(19) Europäisches Patentamt
European Patent Office
Office européen des brevets

(11) **EP 4 290 824 A1**

(12) **EUROPEAN PATENT APPLICATION**
published in accordance with Art. 153(4) EPC

(43) Date of publication:
**13.12.2023 Bulletin 2023/50**

(21) Application number: **22752227.3**

(22) Date of filing: **08.02.2022**

(51) International Patent Classification (IPC):
**H04L 65/40** *(2022.01)*

(52) Cooperative Patent Classification (CPC):
**G06N 3/04; G06N 3/08; H04L 65/40;**
**H04L 67/1008; H04L 67/101; H04L 67/1012;**
**H04L 67/12**

(86) International application number:
**PCT/CN2022/075450**

(87) International publication number:
**WO 2022/171066 (18.08.2022 Gazette 2022/33)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.02.2021 CN 202110184998**

(71) Applicants:
• **CHINA MOBILE COMMUNICATION CO., LTD.**
**RESEARCH INSTITUTE**
**Beijing 100053 (CN)**

• **CHINA MOBILE COMMUNICATIONS GROUP CO.,**
**LTD.**
**Beijing 100032 (CN)**

(72) Inventor: **QU, Wei**
**Beijing 100053 (CN)**

(74) Representative: **J A Kemp LLP**
**80 Turnmill Street**
**London EC1M 5QU (GB)**

(54) **TASK ALLOCATION METHOD AND APPARATUS BASED ON INTERNET-OF-THINGS DEVICE, AND NETWORK TRAINING METHOD AND APPARATUS**

(57) Disclosed are a task allocation method and apparatus based on an Internet-of Things device, and a network training method and apparatus. The network training method comprises: determining a training data set; and training a first network on the basis of the training data set, wherein the training data set comprises at least one task allocation strategy and a corresponding actual performance, an actual performance is obtained on the basis of actual execution of a corresponding task allocation strategy, and the first network is used for predicting the performance of a task allocation strategy.

A training database is determined, wherein the training database includes at least one task allocation strategy and a corresponding actual performance of the at least one task allocation strategy, and the actual performance is acquired by executing a task based on the task allocation strategy — 101

A first network is trained based on the training database, wherein the first network is configured to predict performance of a task allocation strategy — 102

**FIG. 2**

**Description**

CROSS-REFERENCE TO RELATED APPLICATION

This application is based upon and claims priority to Chinese Patent Application No. 202110184998.5 filed on February 10, 2021, the entire contents of which are incorporated herein by reference.

TECHNICAL FIELD

The disclosure relates to the field of internet of things (IoT), and particularly to a method and apparatus for task allocation based on an IoT device, and a method and apparatus for network training based on an IoT device.

BACKGROUND

With breakthroughs in deep learning technology and 5G mobile networks, AI-based internet of things application and service are also about to come across new opportunities and challenges, and intelligent connection of all things undoubtedly is a key technology trend involved therein. Although meeting a demand of a computation-intensive deep learning task for computing power and storage resources, cloud computing does not apply to a scene of IoT that is sensitive to delay, reliability, privacy, etc., such as self-driving, virtual reality (VR), augmented reality (AR), etc. Meanwhile, resources on a single IoT device are extremely limited. Therefore, distributed edge computing that can implement/execute collaboration across multiple interconnected intercommunicating heterogeneous IoT devices may become an effective solution, and allocation of an intelligent computing task across heterogeneous devices will be a key to implementation of the distributed edge computing.

Presently in an edge deep learning system, distributed training and inference of a deep learning model may be implemented mainly through a hierarchical scheduling algorithm based on model segmentation, by allocating some layers of the model to the edge side, and allocating remaining layers to the cloud center. An edge server is mainly configured to process data of a lower layer, while a cloud server is mainly configured to process data of a high layer. Such a task allocation strategy does not involve allocation of an underlying deep learning algorithm, limiting the effect of task scheduling and resource optimization.

SUMMARY

Embodiments of the disclosure provide a method and apparatus for task allocation based on an IoT device, and a method and apparatus for network training based on an IoT device.

Technical solutions of the embodiments of the disclosure are implemented as follows.

In a first aspect, the embodiments of the disclosure provide a method for network training based on an internet of things (IoT) device. The method includes: determining a training dataset; and training a first network based on the training dataset. The training dataset includes at least one task allocation strategy and a corresponding actual performance of the at least one task allocation strategy. The actual performance is obtained by executing a task to be handled according to the task allocation strategy. The first network is configured to predict performance of a task allocation strategy.

In some optional embodiments of the disclosure, the method may further include: determining a computation graph corresponding to the task to be handled and a resource graph corresponding to one or more IoT devices, and generating the at least one task allocation strategy based on the computation graph and the resource graph.

In some optional embodiments of the disclosure, the operation of generating the at least one task allocation strategy based on the computation graph and the resource graph may include: producing at least one resource sub-graph based on the computation graph and the resource graph. Each resource sub-graph of the at least one resource sub-graph may include one task allocation strategy. The task allocation strategy may be configured to allocate at least one node in the resource graph to each node in the computation graph. A node in each resource sub-graph may represent at least part of capabilities on the IoT device(s). An edge of two adjacent nodes in each resource sub-graph may represent a relationship between at least parts of the capabilities on the IoT device(s).

In some optional embodiments of the disclosure, the operation of generating the at least one resource sub-graph based on the computation graph and the resource graph may include: determining a first node in the computation graph, the first node needing the most resources among all nodes in the computation graph; determining at least one second node in the resource graph, the at least one second node meeting the resource demand of the first node; and determining a resource sub-graph based on each second node in the at least one second node. Each resource sub-graph may include one task allocation strategy.

In some optional embodiments of the disclosure, the operation of training the first network may include: training the first network based on the actual performance and a predicted performance of the at least one task allocation strategy.

In some optional embodiments of the disclosure, the operation of obtaining the predicted performance of the at least one task allocation strategy may include: obtaining a predicted performance corresponding to each resource sub-graph by the first network based on a computation graph and the resource sub-graph.

In some optional embodiments of the disclosure, the operation of obtaining the predicted performance corresponding to each resource sub-graph through the first network may include: obtaining a first feature set by extracting at least one feature of the computation graph using a feature extraction model of the first network; obtaining at least one second feature set by respectively extracting at least one feature of at least one resource sub-graph through the feature extraction model; and obtaining the predicted performance corresponding to the resource sub-graph based on the first feature set, each second feature set of the at least one second feature set, and a prediction model of the first network.

In some optional embodiments of the disclosure, the operation of obtaining the predicted performance corresponding to the resource sub-graph based on the first feature set, each second feature set, and the prediction model of the first network may include: obtaining at least one third feature set based on the first feature set and each second feature set, each third feature set of the at least one third feature set including the first feature set and a second feature set; obtaining predicted data corresponding to the resource sub-graph based on each third feature set and the prediction model; and obtaining the predicted performance corresponding to the resource sub-graph based on the predicted data corresponding to the resource sub-graph.

In some optional embodiments of the disclosure, the predicted data may include at least one of: predicted execution duration for executing the task to be handled, predicted energy consumption in executing the task to be handled, or predicted reliability for executing the task to be handled.

In some optional embodiments of the disclosure, the operation of obtaining the predicted performance corresponding to each resource sub-graph based on the predicted data corresponding to the resource sub-graph may include: weighting the predicted data corresponding to the resource sub-graph according to a preset weight, and obtaining the predicted performance corresponding to the resource sub-graph.

In some optional embodiments of the disclosure, the operation of training the first network may include: training the feature extraction model and the prediction model based on an actual performance and a predicted performance of each task allocation strategy of the at least one task allocation strategy.

In some optional embodiments of the disclosure, the operation of training the feature extraction model and the prediction model may include: performing back propagation on an error between the predicted performance and the actual performance of each task allocation strategy, and updating network parameters of the prediction model and the feature extraction model of the first network using a gradient descent algorithm, until the error between the predicted performance and the actual performance meets a preset condition.

In some optional embodiments of the disclosure, the method may further include updating the training dataset. The updated training dataset may be configured to update the first network.

In some optional embodiments of the disclosure, the operation of updating the training dataset may include at least one of:

producing at least one resource sub-graph using at least one of heuristic, graph search, graph optimization, or sub-graph matching based on a computation graph and a resource graph, obtaining an actual performance corresponding to each resource sub-graph of the at least one resource sub-graph by executing the task based on a task allocation strategy corresponding to the resource sub-graph, and putting, into the training dataset, the computation graph, each resource sub-graph, and the actual performance corresponding to the resource sub-graph;

producing the at least one resource sub-graph using at least one of heuristic, graph search, graph optimization, or sub-graph matching based on the computation graph and the resource graph, obtaining a predicted performance corresponding to each resource sub-graph of the at least one resource sub-graph through the first network, selecting a resource sub-graph with a best predicted performance from the at least one resource sub-graph, obtaining an actual performance of a task allocation strategy corresponding to the resource sub-graph with the best predicted performance by executing the task based on the task allocation strategy, and putting, into the training dataset, the computation graph, the resource sub-graph with the best predicted performance, and the actual performance corresponding to the resource sub-graph with the best predicted performance; or

producing at least one resource sub-graph through random walk based on the computation graph and the resource graph, obtaining an actual performance of a task allocation strategy corresponding to each resource sub-graph of the at least one resource sub-graph by executing the task based on the task allocation strategy, and putting, into the training dataset, the computation graph, the at least one resource sub-graph, and the actual performance.

In a second aspect, the embodiments of the disclosure provide a method for task allocation based on an internet of things (IoT) device. The method includes: determining a computation graph corresponding to a task to be handled and a resource graph corresponding to one or more IoT devices; generating at least one task allocation strategy based on the computation graph and the resource graph; putting the at least one task allocation strategy into a first network and obtaining a predicted performance corresponding to each task allocation strategy of the at least one task allocation strategy; determining a task allocation strategy with a best predicted performance; and performing task allocation based on the determined task allocation strategy.

In some optional embodiments of the disclosure, the operation of generating the at least one task allocation strategy based on the computation graph and the resource graph may include: producing at least one resource sub-graph based on the computation graph and the resource graph. Each resource sub-graph of the at least one resource sub-graph may include one task allocation strategy. The task allocation strategy may be configured to allocate at least one node in the resource graph to each node in the computation graph. A node in each resource sub-graph may represent at least part of capabilities on the IoT device(s). An edge of two adjacent nodes in each resource sub-graph may represent a relationship between at least parts of the capabilities on the IoT device(s).

In some optional embodiments of the disclosure, the operation of producing the at least one resource sub-graph based on the computation graph and the resource graph may include: determining a first node in the computation graph, the first node needing the most resources among all nodes in the computation graph; determining at least one second node in the resource graph, the at least one second node meeting the resource demand of the first node; and determining a resource sub-graph based on each second node in the at least one second node. Each resource sub-graph may include one task allocation strategy.

In some optional embodiments of the disclosure, the first network is optimized using the method as described in the first aspect of embodiments of the disclosure.

In some optional embodiments of the disclosure, the operation of obtaining the predicted performance of each task allocation strategy may include: obtaining a predicted performance corresponding to each resource sub-graph by the first network based on the computation graph and the resource sub-graph.

In some optional embodiments of the disclosure, the operation of obtaining the predicted performance corresponding to each resource sub-graph through the first network may include: obtaining a first feature set by extracting at least one feature of the computation graph using a feature extraction model of the first network; obtaining at least one second feature set by respectively extracting at least one feature of at least one resource sub-graph by the feature extraction model; and obtaining the predicted performance corresponding to the resource sub-graph based on the first feature set, each second feature set of the at least one second feature set, and a prediction model of the first network.

In some optional embodiments of the disclosure, the operation of obtaining the predicted performance corresponding to the resource sub-graph based on the first feature set, each second feature set, and the prediction model of the first network may include: obtaining at least one third feature set based on the first feature set and each second feature set, each third feature set of the at least one third feature set including the first feature set and a second feature set; obtaining predicted data corresponding to the resource sub-graph based on each third feature set and the prediction model; and obtaining the predicted performance corresponding to the resource sub-graph based on the predicted data corresponding to the resource sub-graph.

In some optional embodiments of the disclosure, the predicted data include at least one of: predicted execution duration for executing a task to be handled, predicted energy consumption in executing the task to be handled, or predicted reliability for executing the task to be handled.

In some optional embodiments of the disclosure, the operation of obtaining the predicted performance corresponding to each resource sub-graph based on the predicted data corresponding to the resource sub-graph may include weighting predicted data corresponding to each resource sub-graph according to a preset weight, and obtaining predicted performance corresponding to the resource sub-graph.

In some optional embodiments of the disclosure, the method may further include: after performing the task allocation, obtaining an actual performance of the task allocation strategy when the task to be handled is executed based on the task allocation strategy; and recording the task allocation strategy and the actual performance in a training dataset. The training dataset may be used to update the first network.

In a third aspect, the embodiments of the disclosure provide an apparatus for network training based on an internet of things (IoT) device, including a first determining unit and a training unit.

The first determining unit may be configured to determine a training dataset. The training dataset includes at least one task allocation strategy and a corresponding actual performance of the at least one task allocation strategy. The actual performance is obtained by executing a task to be handled according to the task allocation strategy.

The training unit may be configured to train a first network based on the training dataset. The first network is configured to predict performance of a task allocation strategy.

In some optional embodiments of the disclosure, the apparatus may further include a first generating unit. The first generating unit is configured to determine a computation graph corresponding to the task to be handled and a resource graph corresponding to one or more IoT devices, and generate the at least one task allocation strategy based on the computation graph and the resource graph.

In some optional embodiments of the disclosure, the first generating unit may be configured to produce at least one resource sub-graph based on the computation graph and the resource graph. Each resource sub-graph of the at least one resource sub-graph may include one task allocation strategy. The task allocation strategy may be configured to allocate at least one node in the resource graph to each node in the computation graph. A node in each resource sub-graph may represent at least part of capabilities on the IoT device(s). An edge of two adjacent nodes in each resource sub-graph may represent a relationship between at least parts of the capabilities on the IoT device(s).

In some optional embodiments of the disclosure, the first generating unit may be configured to determine a first node in the computation graph, the first node needing the most resources among all nodes in the computation graph; determine at least one second node in the resource graph, the at least one second node meeting the resource demand of the first node; and determine a resource sub-graph based on each second node in the at least one second node. Each resource sub-graph may include one task allocation strategy.

In some optional embodiments of the disclosure, the training unit may be configured to train the first network based on the actual performance and a predicted performance of the at least one task allocation strategy.

In some optional embodiments of the disclosure, the training unit may be configured to obtain a predicted performance corresponding to each resource sub-graph by the first network based on a computation graph and the resource sub-graph.

In some optional embodiments of the disclosure, the training unit may be configured to obtain a first feature set by extracting at least one feature of the computation graph using a feature extraction model of the first network; obtain at least one second feature set by respectively extracting at least one feature of at least one resource sub-graph through the feature extraction model; and obtain the predicted performance corresponding to the resource sub-graph based on the first feature set, each second feature set of the at least one second feature set, and a prediction model of the first network.

In some optional embodiments of the disclosure, the training unit may be configured to obtain at least one third feature set based on the first feature set and each second feature set, each third feature set of the at least one third feature set including the first feature set and a second feature set; obtain predicted data corresponding to each resource sub-graph based on each third feature set and the prediction model; and obtain the predicted performance corresponding to the resource sub-graph based on the predicted data corresponding to the resource sub-graph.

In some optional embodiments of the disclosure, the predicted data may include at least one of: predicted execution duration for executing a task to be handled, predicted energy consumption in executing the task a task to be handled, or predicted reliability for executing the task a task to be handled.

In some optional embodiments of the disclosure, the training unit may be configured to weight predicted data corresponding to each resource sub-graph according to a preset weight, and obtain predicted performance corresponding to the resource sub-graph.

In some optional embodiments of the disclosure, the training unit may be configured to train the feature extraction model and the prediction model based on an actual performance and a predicted performance of each task allocation strategy of the at least one task allocation strategy.

In some optional embodiments of the disclosure, the training unit may be configured to perform back propagation on an error between the predicted performance and the actual performance of each task allocation strategy, and update network parameters of the prediction model and the feature extraction model of the first network using a gradient descent algorithm, until the error between the predicted performance and the actual performance meets a preset condition.

In some optional embodiments of the disclosure, the apparatus may further include an updating unit. The updating unit may be configured to update the training dataset. The updated training dataset may be configured to update the first network.

In some optional embodiments of the disclosure, the updating unit may be configured to update the training dataset by at least one of:

producing at least one resource sub-graph using at least one of heuristic, graph search, graph optimization, or sub-graph matching based on a computation graph and a resource graph, obtaining an actual performance corresponding to each resource sub-graph of the at least one resource sub-graph by executing the task based on a task allocation strategy corresponding to the resource sub-graph, and putting, into the training dataset, the computation graph, each resource sub-graph, and the actual performance corresponding to the resource sub-graph;

producing the at least one resource sub-graph using at least one of heuristic, graph search, graph optimization, or sub-graph matching based on the computation graph and the resource graph, obtaining a predicted performance corresponding to each resource sub-graph of the at least one resource sub-graph through the first network, selecting a resource sub-graph with a best predicted performance from the at least one resource sub-graph, obtaining an actual performance of a task allocation strategy corresponding to the resource sub-graph with the best predicted performance by executing the task based on the task allocation strategy, and putting, into the training dataset, the computation graph, the resource sub-graph with the best predicted performance, and the actual performance corresponding to the resource sub-graph with the best predicted performance; or

producing at least one resource sub-graph through random walk based on the computation graph and the resource graph, obtaining an actual performance of a task allocation strategy corresponding to each resource sub-graph of the at least one resource sub-graph by executing the task based on the task allocation strategy, and putting, into the training dataset, the computation graph, the at least one resource sub-graph, and the actual performance.

In a fourth aspect, the embodiments of the disclosure further provide an apparatus for task allocation based on an internet of things (IoT) device, including a second determining unit, a second generating unit, a predicting unit, and a task allocating unit.

The second determining unit may be configured to determine a computation graph corresponding to a task to be handled and a resource graph corresponding to one or more IoT devices.

The second generating unit may be configured to generate at least one task allocation strategy based on the computation graph and the resource graph.

The predicting unit may be configured to put the at least one task allocation strategy into a first network and obtain a predicted performance corresponding to each task allocation strategy of the at least one task allocation strategy.

The task allocating unit may be configured to determine a task allocation strategy with a best predicted performance, and perform task allocation based on the determined task allocation strategy.

In some optional embodiments of the disclosure, the second generating unit may be configured to produce at least one resource sub-graph based on the computation graph and the resource graph. Each resource sub-graph of the at least one resource sub-graph may include one task allocation strategy. The task allocation strategy may be used to allocate at least one node in the resource graph to each node in the computation graph. A node in each resource sub-graph may represent at least part of capabilities on the IoT device(s). An edge of two adjacent nodes in each resource sub-graph may represent a relationship between at least parts of the capabilities on the IoT device(s).

In some optional embodiments of the disclosure, the second generating unit may be configured to determine a first node in the computation graph, the first node needing the most resources among all nodes in the computation graph; determine at least one second node in the resource graph, the at least one second node meeting the resource demand of the first node; and determine a resource sub-graph based on each second node in the at least one second node. Each resource sub-graph may include one task allocation strategy.

In some optional embodiments of the disclosure, the first network is optimized using the apparatus as described in the third aspect of embodiments of the disclosure.

In some optional embodiments of the disclosure, the predicting unit may be configured to obtain a predicted performance corresponding to each resource sub-graph by the first network based on the computation graph and the resource sub-graph.

In some optional embodiments of the disclosure, the predicting unit may be configured to obtain a first feature set by extracting at least one feature of the computation graph using a feature extraction model of the first network; obtain at least one second feature set by respectively extracting at least one feature of at least one resource sub-graph through the feature extraction model; and obtain the predicted performance corresponding to the resource sub-graph based on the first feature set, each second feature set of the at least one second feature set, and a prediction model of the first network.

In some optional embodiments of the disclosure, the predicting unit may be configured to obtain at least one third feature set based on the first feature set and each second feature set, each third feature set of the at least one third feature set including the first feature set and a second feature set; obtain predicted data corresponding to the resource sub-graph based on each third feature set and the prediction model; and obtain the predicted performance corresponding to the resource sub-graph based on the predicted data corresponding to the resource sub-graph.

In some optional embodiments of the disclosure, the predicted data may include at least one of: predicted execution duration for executing a task to be handled, predicted energy consumption in executing the task to be handled, or predicted reliability for executing the task to be handled.

In some optional embodiments of the disclosure, the predicting unit may be configured to weight predicted data corresponding to each resource sub-graph according to a preset weight, and obtain predicted performance corresponding to the resource sub-graph.

In some optional embodiments of the disclosure, the apparatus may further include an obtaining unit. The obtaining unit may be configured to, after the task allocation is performed, obtain an actual performance of the task allocation strategy when the task to be handled is executed based on the task allocation strategy; and record the task allocation strategy and the actual performance in a training dataset. The training dataset may be used to update the first network.

In a fifth aspect, the embodiments of the disclosure further provide a computer-readable storage medium having stored thereon a computer program which, when executed by a processor, implements steps of the method as descried in the first aspect or the second aspect of embodiments of the disclosure.

In a sixth aspect, the embodiments of the disclosure further provide an electronic device, including a memory, a processor, and a computer program stored on the memory and executable by the processor. When executing the computer program, the processor implements steps of the method as descried in the first aspect or the second aspect of embodiments of the disclosure.

According to technical solutions of the embodiments of the disclosure, on the one hand, a training dataset is determined, and a first network is trained based on the training dataset. The training dataset includes at least one task allocation strategy and a corresponding actual performance of the at least one task allocation strategy. An actual performance is obtained by implementing a task to be handled according to a corresponding task allocation strategy. The actual performance is a true (or actual) value of the performance. The first network is used to predict performance of a task allocation strategy. On the other hand, a computation graph corresponding to a task to be handled and a resource graph corresponding to one or more IoT devices are determined. At least one task allocation strategy is produced based on the computation graph and the resource graph. A predicted performance of each task allocation strategy of the at least one task allocation strategy is obtained by inputting the at least one task allocation strategy into the first network. The predicted performance is a predicted value of the performance. A task allocation strategy with a best predicted performance is determined, and the task allocation is performed based on the determined task allocation strategy. In this way, by training the first network, system performance in performing a task to be handled according to a task allocation strategy is predicted, thereby determining an optimal allocation strategy, implementing optimal matching of a task to be handled to available resources on a device during task allocation, thus maximizing resource utilization and improving system performance.

BRIEF DESCRIPTION OF THE DRAWINGS

FIG. 1 is a diagram of an optional scene to which embodiments of the disclosure are applied.

FIG. 2 is a flowchart of a method for network training based on an IoT device according to an embodiment of the disclosure.

FIG. 3 is a flowchart of producing a resource sub-graph according to an embodiment of the disclosure.

FIG. 4 is a diagram of producing a resource sub-graph according to an embodiment of the disclosure.

FIG. 5 is a flowchart of obtaining predicted performance according to an embodiment of the disclosure.

FIG. 6a is a diagram of feature extraction for a computation graph according to an embodiment of the disclosure.

FIG. 6b is a diagram of feature extraction for a resource sub-graph according to an embodiment of the disclosure.

FIG. 7 is a flowchart of a method for task allocation based on an IoT device according to an embodiment of the disclosure.

FIG. 8 is a diagram of a method for task allocation based on an IoT device according to an embodiment of the disclosure.

FIG. 9 is a diagram of composition of a system for task allocation according to an embodiment of the disclosure.

FIG. 10 is a first diagram of a structure of composition of an apparatus for network training based on an IoT device according to an embodiment of the disclosure.

FIG. 11 is a second diagram of a structure of composition of an apparatus for network training based on an IoT device according to an embodiment of the disclosure.

FIG. 12 is a third diagram of a structure of composition of an apparatus for network training based on an IoT device according to an embodiment of the disclosure.

FIG. 13 is a diagram of a structure of composition of an apparatus for task allocation based on an IoT device according to an embodiment of the disclosure.

FIG. 14 is a diagram of a structure of composition of hardware of an electronic device according to an embodiment of the disclosure.

DETAILED DESCRIPTION

The disclosure is further elaborated below with reference to the drawings and embodiments.

On the one hand, with breakthroughs in deep learning technology as well as promotion and popularization of 5G technology, a field such as internet of vehicles, smart elderly care, smart community, industrial internet, etc., will provide an increasing number of smart services, implementation of which often rely on AI technology and a deep learning model. On the other hand, with rapid increase of a number and a degree of intelligence of IoT devices, in order to make the most of resource-limited, highly heterogeneous IoT devices, it may be considered to implement a computation-intensive computing task in parallel in a distributed mode through resource sharing and device collaboration using unused resources (or idle resources, free resources, available resources, unused capability, idle capability, available capability, free capability) on widely distributed IoT devices. Based on this, embodiments of the disclosure mainly are to construct an end-to-end trainable network model that schedules resources across heterogeneous IoT devices, and implement high-performance, intelligently adaptive task allocation that can be optimized automatically. By learning resource management and task scheduling strategies subject to long-term optimization, appropriate computing power as well as storage and communication resources are allocated to a node in a computation graph in a mode of task allocation capable of obtaining optimal system performance, facilitating implementation of decentralized machine learning (such as training and inference of a deep model) of cross-device collaboration, further contributing to implementation of a smart application and a smart service in a scene of internet of things.

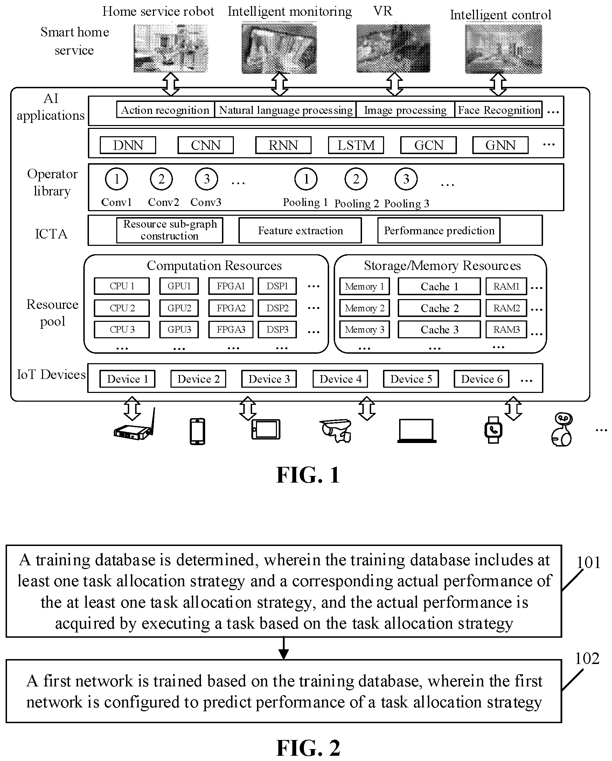

FIG. 1 is a diagram of an optional scene to which embodiments of the disclosure are applied. As shown in FIG. 1, a smart home service may include, but is not limited to: a home service robot, intelligent monitoring, virtual reality (VR), intelligent control, etc. Structured data and unstructured data including data such as video data, image data, voice data, text data, etc., may be collected using an IoT device. Collected data are input into a designed network model. A computing task corresponding to the data is implemented using a hardware resource on an IoT device, thereby implementing various smart functions, such as natural language processing, image recognition, face recognition, and action recognition in AI application, etc. A function mentioned above may be implemented by implementing a computing task such as deep neural networks (DNN), convolutional neural networks (CNN), a recurrent neural network (RNN), a long short-term memory (LSTM) network, graph convolutional networks (GCN), graph neural networks (GNN), etc. Various abstract operations in a network configured to implement a computing task mentioned above may be broken up to obtain a series of operators, such as convolution (Conv), pooling, etc., that represent some type of operation in a task to be handled. Various operators may form an operator library.

The scene may further include multiple internet of things (IoT) devices at an edge side. Each IoT device may have distinct capabilities. The capability may be embodied by a computation resource, a storage/memory resource, a communication resource, etc. The computation resource may refer to an available or unused computation resource, and may include, for example, a central processing unit (CPU) resource, a graphics processing unit (GPU) resource, a field-programmable gate array (FPGA) resource, a digital signal processor (DSP) resource, etc. The storage/memory resource may refer to an available or unused storage/memory resource, and may include, for example, a memorizer resource, a cache resource, a random access memory (RAM), etc. The communication resource may refer to an available or unused communication resource. Then, different IoT devices may provide at least one of distinct computation resources, storage/memory resources, or communication resources. Computation resources, storage/memory resources, and communication resources of various IoT devices may form a resource pool.

In the embodiments, smart task allocation is implemented in a mode such as producing a computation graph by abstracting an operator of a computing task into a node corresponding to the operator; producing a resource graph by abstracting capability on an IoT device into a node corresponding to the capability; implementing resource sub-graph construction based on the computation graph and the resource graph; performing feature extraction on the computation graph and a resource sub-graph; performing performance prediction on an underlying task allocation strategy in an extracted feature according to the extracted feature, etc.

The smart home service scene shown in FIG. 1 is just an optional application scene where a technical solution of embodiments of the disclosure may be applied. Another application scene may also fall within the scope of embodiments of the disclosure, which is not specifically limited in embodiments of the disclosure.

Embodiments of the disclosure provide a method for network training based on an internet of things (IoT) device, applicable to various electronic devices. Such an electronic device may include, but is not limited to, a fixed device and / or a mobile device. For example, the fixed device may include, but is not limited to, a personal computer (PC) or a server, etc. The server may be a cloud server or a general server. The mobile device may include, but is not limited to, one or more of a mobile phone, a tablet computer, or a wearable device.

FIG. 2 is a flowchart of a method for network training based on an IoT device according to an embodiment of the disclosure. As shown in FIG. 2, the method includes steps as follows.

At 101, a training dataset is determined. The training dataset includes at least one task allocation strategy and a corresponding actual performance of the at least one task allocation strategy. The actual performance is obtained by executing a task based on the task allocation strategy.

At 102, a first network is trained based on the training dataset. The first network is configured to predict performance of a task allocation strategy.

In the implementation, a task allocation strategy may represent a strategy with which a task to be handled is allocated to and implemented by at least one IoT device. In other words, at least one IoT device may be determined through a task allocation strategy, and a task to be handled may be implemented by the at least one IoT device as instructed by the task allocation strategy. In one example, a task allocation strategy may also be referred to as one of a task allocation method, a task allocation mode, a task scheduling strategy, a task scheduling method, a task scheduling mode, a task arrangement strategy, a task arrangement method, a task arrangement mode, etc.

In the implementation, identical or different system performance, i.e., actual performance as above mentioned, may be obtained by actually implementing a task to be handled using different task allocation strategies. The actual performance may represent the performance of the system in actually implementing the task to be handled, such as execution duration, energy consumption, reliability, etc. In the embodiment, the first network is trained using task allocation strategies and actual performance corresponding to the respective strategies in the training dataset (database).

In the implementation, IoT devices in the system may be heterogeneous IoT devices. Here, by heterogeneous IoT devices, it may mean that in a network including multiple IoT devices and servers, one IoT device differs from another IoT device in terms of the hardware and / or the server. Regarding that one IoT device differs from another IoT device in terms of the hardware, it may mean that a model or type of hardware corresponding to at least one of a computation resource or a storage/memory resource of the one IoT device differs from that of the other IoT device. Taking the hardware corresponding to a computation resource as an example, the hardware model of at least one of a CPU, a GPU, a bus interface chip (BIC), a DSP, a FPGA, an application specific integrated circuit (ASIC), a tensor processing unit (TPU), an artificial intelligence (AI) chip, etc., of the one IoT device differs from the hardware model of that of the other IoT device. Taking the hardware corresponding to a storage/memory resource as another example, the hardware model of at least one of a RAM, a read only memory (ROM), a cache, etc., of the one IoT device differs from the hardware model of that of the other IoT device. Regarding that one IoT device differs from another IoT device in terms of the server, it may mean that a backend program corresponding to the one IoT device differs from a backend program corresponding to the other IoT device. A backend program may include an operating system. That is, an operating system of the one IoT device may differ from an operating system of the other IoT device. In other words, the two IoT devices may differ from each other at a software level.

Exemplarily, an IoT device here may include a mobile phone, a PC, a wearable smart device, a smart gateway, a computing box, etc. A PC may include a desktop computer, a notebook computer, a tablet computer, etc. A wearable smart device may include a smart watch, smart glasses, etc.

In some optional embodiments of the disclosure, the method may further include a step as follows. A computation graph corresponding to a task to be handled and a resource graph corresponding to one or more IoT devices may be determined. At least one task allocation strategy may be produced based on the computation graph and the resource graph.

In the embodiment, a computation graph may include a task to be handled. The computation graph may include at least one node. Each node may correspond to some operation or operator in the task to be handled. An edge of two adjacent nodes may represent a relationship between the two nodes. Exemplarily, the computation graph includes three nodes connected in sequence, indicating that the task to be handled is to be implemented through operators corresponding to the three nodes. After the task to be handled has been processed by the first node through a corresponding first operator, data output by the first node may be sent to the second node and then processed by the second node through a corresponding second operator. Data processed by the second node may be sent to the third node and processed by the third node through a corresponding third operator, thereby implementing the task.

In the implementation, a resource graph may include capabilities (also known as resources) on IoT devices in the system. The capabilities on an IoT device may include at least one of computing power, storage capability, or communication capability. Exemplarily, the resource graph may include at least one node. Each node may correspond to at least part of the capabilities on an IoT device. In one example, a node may represent all capabilities, such as the computing power, the storage capability, the communication capability, etc., of an IoT device. In another example, a node may represent part of the capabilities on an IoT device, such as only the computing power or the storage capability on the IoT device, or only part of the computing power and / or part of the storage capability on the IoT device. An edge of two nodes may represent a relationship between at least parts of the capabilities on the IoT device.

In some optional implementations, at least one task allocation strategy is produced based on the computation graph and the resource graph as follows. At least one resource sub-graph is produced based on the computation graph and the resource graph. Each of the at least one resource sub-graph includes one task allocation strategy, and the task allocation strategy is configured to allocate at least one node in the resource graph to each node in the computation graph. A node in each resource sub-graph represents at least part of capabilities on the IoT device(s). An edge of two adjacent nodes in each resource sub-graph represents a relationship between at least parts of the capabilities on the IoT device(s).

In the embodiment, a task allocation strategy may be configured to allocate at least one node in the resource graph to each node in the computation graph, or to allocate or map the task to be handled to at least one IoT device, or to match the task to be handled with an IoT device, or to match the task to be handled with a resource.

In actual application, the at least one node in the resource graph allocated to each node in the computation graph may be the same or different. That is, an IoT device may implement computing units corresponding to multiple operators using at least part of the capabilities on the IoT device per se. Meanwhile, multiple IoT devices may collaborate with each other to implement a computing unit corresponding to one operator. In addition, nodes or operators with no computing dependency, i.e., data dependency, in the computation graph may be implemented (or operated or computed) in parallel on the same IoT device or on different IoT devices.

Exemplarily, one task allocation strategy may be embodied or represented by one resource sub-graph. In other words, the training dataset/database may include the computation graph, at least one resource sub-graph, and actual performance corresponding to the task allocation strategy. In the embodiment, based on the computation graph constructed for the task to be handled and the resource graph constructed for multiple heterogeneous IoT devices including unused resources, at least one resource sub-graph, i.e., at least one task allocation strategy, is produced/generated from the complete resource graph according to a demand of the task to be handled for a computation resource, a storage/memory resource, and a communication resource as well as a relationship between available resources or capabilities on IoT devices. With resource sub-graph construction, full use of an idle resource on an IoT device as well as fine grained task allocation and optimization is implemented.

In one example, a resource graph in the embodiments may also be referred to as a resource knowledge graph or a resource knowledge map. A resource sub-graph may also be referred to as a resource knowledge sub-graph or a resource knowledge sub-map, etc.

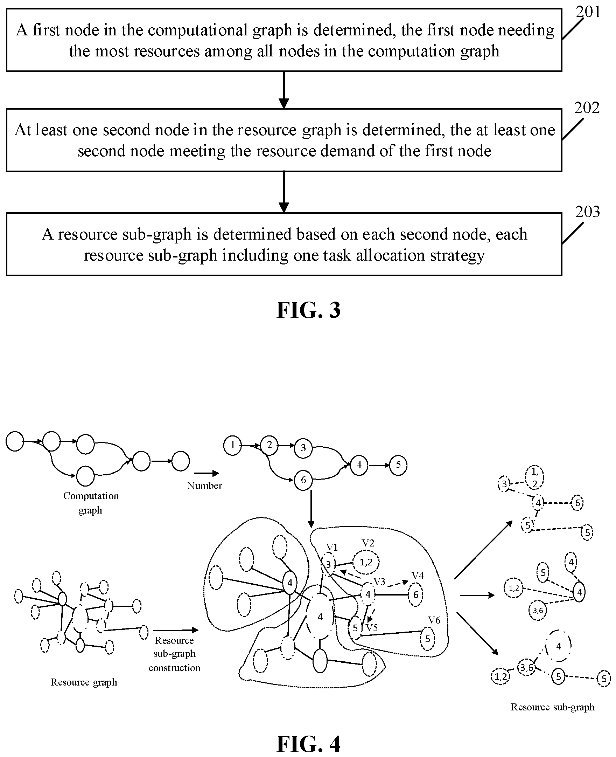

FIG. 3 is a flowchart of producing a resource sub-graph according to an embodiment of the disclosure. As shown in FIG. 3, a resource sub-graph may be produced as follows.

At 201, a first node in the computation graph is determined. The first node is a node needing the most resources among all nodes in the computation graph.

At 202, at least one second node in the resource graph is determined. The at least one second node is at least one node meeting the resource demand of the first node.

At 203, a resource sub-graph is determined based on each second node. Each resource sub-graph includes one task allocation strategy.

Exemplarily, FIG. 4 is a diagram of producing a resource sub-graph according to an embodiment of the disclosure. Referring to FIG. 4, first, each node in a computation graph may be numbered.

Exemplarily, nodes in the computation graph may be labeled based on a unified rule. For example, a branch with a most number of nodes in the computation graph may be determined first. The nodes in the branch may be numbered according to the order of the respective nodes in the branch. For example, a branch having a most number of nodes in FIG. 4 has 5 nodes, nodes in this branch may be numbered sequentially. Then, all nodes in a branch having a second most number of nodes may be numbered, and so on, until all nodes in the computation graph have been numbered.

Then, a first node in all nodes of the computation graph may be determined. The first node is a node having a resource demand that is maximum. The first node may also be referred to as a bottleneck node. For example, a node numbered 4 on the computation graph in FIG. 4 needs the most resources among all the nodes in the computation graph. The node numbered 4 may be determined as the first node or the bottleneck node. The node needing the most resources among all the nodes in the computation graph may refer to a node having the maximum demand for at least one of a computation resource, a storage/memory resource, or a communication resource.

Further, at least one second node in the resource graph may be determined. That is, an appropriate resource node (which may also be referred to as a device node or a capability node) may be allocated to the first node (or the bottleneck node), to provide an available resource for implementing the task to be handled. Exemplarily, any node in the resource graph meeting the resource demand of the first node (or the bottleneck node) may be determined as the second node. For example, three nodes numbered 4 in the resource graph of FIG. 4 may all meet the resource demand of the first node (or the bottleneck node). Then, all three nodes numbered 4 may be determined as second nodes. Normally, there may be more than one resource node in the resource graph meeting the resource demand of the first node (or the bottleneck node). Therefore, more than one resource sub-graph may be produced.

Thirdly, in the resource graph, starting from each resource node corresponding to the first node (or the bottleneck node), such as from the resource node numbered 4 (denoted as node V3) at the right side of the resource graph in FIG. 4, the resource graph may be searched for another resource node (such as nodes V1, V4, V5 in the resource graph in FIG. 4) adjacent to the starting node. An appropriate resource node may be allocated to a node (such as nodes 3, 5, 6 in the computation graph) in the computation graph that is 1 hop away from the first node, to meet the resource demand of a work load corresponding to the node. For example, the node V1 in the resource graph is allocated to the node 3 in the computation graph, the node V4 in the resource graph may be allocated to the node 6 in the computation graph, and the node V5 in the resource graph may be allocated to the node 5 in the computation graph. A resource node may further be allocated to a node (such as the node 2 in the computation graph) in the computation graph that is 2 hops away from the first node. For example, the node V2 in the resource graph is allocated to the node 2 in the computation graph, and so on, until a resource node in the resource graph has been allocated to each node in the computational graph.

Resource node allocation may be implemented according to the above steps for each resource node in the resource graph meeting the resource demand of the first node (or the bottleneck node). In this way, three task allocation strategies shown on the right in FIG. 4 may be obtained. That is, three resource sub-graphs may be obtained. Construction of multiple task allocation strategies (i.e., resource sub-graphs) facilitates subsequent selection of an optimal task allocation strategy through feature extraction and performance prediction.

Resource sub-graph construction according to the embodiment is just an example. Other allocation manner for the task allocation strategy may also fall within the scope of embodiments of the disclosure.

In some optional embodiments, the first network may be trained as follows. The first network is trained based on the actual performance and predicted performance of the at least one task allocation strategy.

In the implementation, the predicted performance of each task allocation strategy may be obtained through the first network. The first network may be trained through the predicted performance and actual performance as well as the error back propagation mode.

In some optional embodiments, the predicted performance of at least one task allocation strategy may be obtained as follows. The predicted performance corresponding to each resource sub-graph is obtained by the first network based on the computation graph and each resource sub-graph.

In the implementation, the predicted performance corresponding to a resource sub-graph may be obtained by inputting the computation graph and the resource sub-graph into the first network.

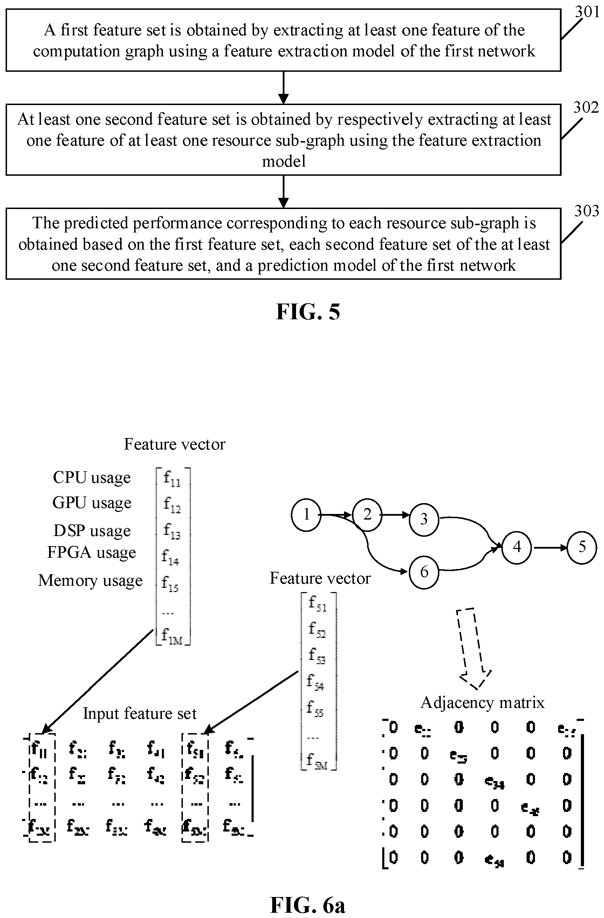

Exemplarily, FIG. 5 is a flowchart of obtaining predicted performance according to an embodiment of the disclosure. As shown in FIG. 5, predicted performance may be obtained as follows.

At 301, a first feature set is obtained by extracting at least one feature of the computation graph using a feature extraction model of the first network.

At 302, at least one second feature set is obtained by respectively extracting at least one feature of at least one resource sub-graph using the feature extraction model.

At 303, the predicted performance corresponding to each resource sub-graph is obtained based on the first feature set, each second feature set of the at least one second feature set, and a prediction model of the first network.

In the implementation, a first feature set may be obtained by extracting at least one feature of the computation graph using the feature extraction model. The first feature set may also be referred to as a feature set, a feature, a feature vector, etc. In order to capture dependency of the graph through message delivery among nodes of the graph, features of the computation graph and of a resource sub-graph may be extracted respectively using the feature extraction model. The features may include those of a CPU, a GPU, an FPGA, a DSP, a RAM, etc., covering mainly at least one feature of a dimension such as computing power, storage, communication, etc.

Exemplarily, an input feature set of the computation graph is determined. The input feature set may also be referred to as an input feature, an input feature vector, an input feature matrix, etc., and include input feature information of each node in the computation graph. An adjacency matrix of the computation graph may be determined. The adjacency matrix may represent information on topology of the computation graph. Alternatively, the adjacency matrix may represent a relationship among nodes in the computation graph. The first feature set may be obtained by extracting at least one feature of the computation graph based on the input feature set, the adjacency matrix, and the feature extraction model.

In one example, the input feature set of the computation graph includes a feature vector of each node in the computation graph. The feature vector of each node in the computation graph may include information on a resource required for implementing an operator corresponding to each node. The information on the resource required may include a CPU, a GPU, a DSP, a FPGA, RAM usage, etc., for example.

In one example, an element in the adjacency matrix of the computation graph represents a strength of a relationship between two nodes. A numerical value of the element is related to a size of data transmitted between the two nodes.

Exemplarily, FIG. 6a is a diagram of feature extraction for a computation graph according to an embodiment of the disclosure. As shown in FIG. 6a, the computation graph includes 6 nodes, and correspondingly, the input feature set includes 6 sets of feature vectors, represented for example by

$$\begin{bmatrix} f_{11} & f_{21} & f_{31} & f_{41} & f_{51} & f_{61} \\ f_{12} & f_{22} & f_{32} & f_{42} & f_{52} & f_{61} \\ \dots & \dots & \dots & \dots & \dots & \dots \\ f_{1M} & f_{2M} & f_{3M} & f_{4M} & f_{5M} & f_{6M} \end{bmatrix} \quad (1)$$

Each set of feature vectors (i.e., each column in the matrix) may correspond to a node in the computation graph. The set of feature vectors may include features of usage of (or demand for) respective resources in executing (or operating) an operator corresponding to the node, i.e., a hardware implementing cost of the operator, or hardware occupancy data of the operator, including a feature such as a CPU usage, a GPU usage, a DSP usage, an FPGA usage, a storage usage, etc. The usage may also be referred to as occupancy, a proportion of occupancy, a ratio of occupancy, use, a rate of use, a proportion of use, a ratio of use, utilization, a rate of utilization, a proportion of utilization, a ratio of utilization, etc. It may be determined based on connection relationships among nodes in the computation graph that node 1 is connected to node 2, node 2 is connected to node 3, node 3 is connected to node 4, node 4 is connected to node 5, node 1 is connected to node 6, and node 6 is connected to node 4. Therefore, it may be determined that the elements in the adjacency matrix corresponding to the connections (i.e., $e_{12}$, $e_{16}$, $e_{23}$, $e_{34}$, $e_{45}$, and $e_{64}$ as shown in FIG. 6a) have specific values, while any remaining element has a value of 0. The adjacency matrix may be as follows.

$$\begin{bmatrix} 0 & e_{12} & 0 & 0 & 0 & e_{16} \\ 0 & 0 & e_{23} & 0 & 0 & 0 \\ 0 & 0 & 0 & e_{34} & 0 & 0 \\ 0 & 0 & 0 & 0 & e_{45} & 0 \\ 0 & 0 & 0 & 0 & 0 & 0 \\ 0 & 0 & 0 & e_{64} & 0 & 0 \end{bmatrix} \quad (2)$$

The numerical value of an element is related to the size of data transmitted between two nodes corresponding to the element.

Exemplarily, e=kd. k may denote a preset coefficient, d may denote the size of data transmitted between two adjacent nodes.

For example, $e_{34}=kd_{34}$. $d_{34}$ may denote the size of data transmitted between the node 3 and the node 4 in the computation graph.

Then, the adjacency matrix and the input feature set such as those shown in FIG. 6a may be input into the feature extraction model, thereby obtaining the first feature set.

Similarly, a second feature set may be obtained by extracting at least one feature of a resource sub-graph through the feature extraction model. The second feature set may also be referred to as a feature set, a feature, a feature vector, etc.

Exemplarily, an input feature set of a resource sub-graph may be determined. The input feature set may include input feature information of each node in the resource sub-graph. An adjacency matrix of the resource sub-graph may be determined. The adjacency matrix may represent information on topology of the resource sub-graph. Alternatively, the adjacency matrix may represent a relationship among nodes in the resource sub-graph. The second feature set may be obtained by extracting at least one feature of the resource sub-graph based on the input feature set, the adjacency matrix, and the feature extraction model.

In one example, the input feature set of the resource sub-graph includes a feature vector of each node in the resource sub-graph. The feature vector of each node in the resource sub-graph may include information on at least part of resources (or referred to as capability information) that an IoT device corresponding to the node has. The information on the at least part of resources may include available resources, such as a CPU, a GPU, a DSP, an FPGA, a RAM, etc.

In one example, an element in the adjacency matrix of the resource sub-graph represents a strength of communication between two nodes. A numerical value of the element is related to a delay and / or a transmission speed between the two nodes, etc.

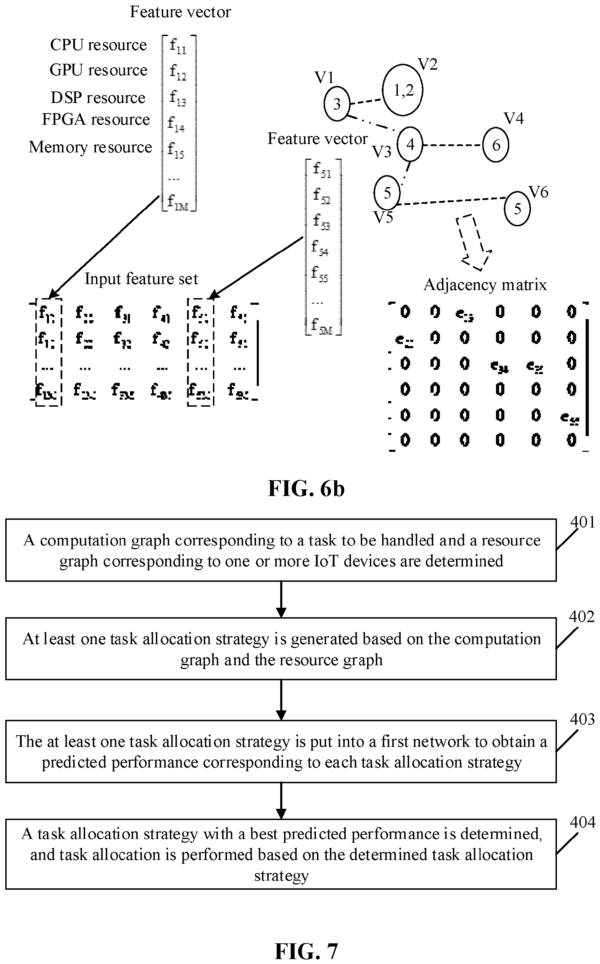

Exemplarily, FIG. 6b is a diagram of feature extraction for a resource sub-graph according to an embodiment of the disclosure. FIG. 6b illustrates a task allocation strategy, i.e., a resource sub-graph. The resource sub-graph includes 6 nodes, and correspondingly, the input feature set of the resource sub-graph includes 6 sets of feature vectors, represented for example by

$$\begin{bmatrix} f_{11} & f_{21} & f_{31} & f_{41} & f_{51} & f_{61} \\ f_{12} & f_{22} & f_{32} & f_{42} & f_{52} & f_{61} \\ \dots & \dots & \dots & \dots & \dots & \dots \\ f_{1M} & f_{2M} & f_{3M} & f_{4M} & f_{5M} & f_{6M} \end{bmatrix} \qquad (3)$$

Each set of feature vectors (i.e., each column in the matrix) may correspond to a node in the resource sub-graph. The set of feature vectors may include features of resources corresponding to the node, including features such as a CPU resource, a GPU resource, a DSP resource, an FPGA resource, a storage/memory resource, etc. In addition, it may be determined based on connection relationships among nodes in the computation graph that node V2 is connected to node V1, node V1 is connected to node V3, node V3 is connected to node V4, node V3 is connected to node V5, and node V5 is connected to node V6. Therefore, it may be determined that the elements in the adjacency matrix corresponding to the connections (i.e., $e_{13}$, $e_{21}$, $e_{34}$, $e_{35}$, $e_{56}$ as shown in FIG. 6b) have specific values, while any remaining element has a value of 0. The adjacency matrix may be as follows.

$$\begin{bmatrix} 0 & 0 & e_{13} & 0 & 0 & 0 \\ e_{21} & 0 & 0 & 0 & 0 & 0 \\ 0 & 0 & 0 & e_{34} & e_{35} & 0 \\ 0 & 0 & 0 & 0 & 0 & 0 \\ 0 & 0 & 0 & 0 & 0 & e_{56} \\ 0 & 0 & 0 & 0 & 0 & 0 \end{bmatrix} \qquad (4)$$

The numerical value of an element is related to a delay and / or a transmission speed between two nodes corresponding to the element, etc.

Exemplarily, $e=k_1ts+k_2l$. $k_1$ and $k_2$ may represent a preset coefficient, respectively, ts may represent a transmission speed between two adjacent nodes. l may represent a delay of transmission between the two adjacent nodes.

For example, $e_{34}= k_1ts_{34}+k_2l_{34}$. $ts_{34}$ may represent a transmission speed between node V3 and node V4 in the resource sub-graph. $l_{34}$ may represent a delay between node V3 and node V4 in the resource sub-graph.

Then, the adjacency matrix and the input feature set such as those shown in FIG. 6b may be input into the feature extraction model, thereby obtaining the second feature set.

In the implementation, the input feature set and the adjacency matrix corresponding to the computation graph or the resource sub-graph may be taken as inputs to the feature extraction model, and feature update is implemented through a forward propagation algorithm with the expression (5) as follows. A feature set (or feature vector) integrating features of all nodes and edges in the computation graph or the resource sub-grap, i.e., the first feature set corresponding to the computation graph as well as the second feature set corresponding to the resource sub-graph, may be obtained through forward propagation of a multilayer network in the feature extraction model.

$$H^{(l+1)} = \sigma(\widehat{D}^{-\frac{1}{2}}\widehat{A}\widehat{D}^{-\frac{1}{2}}H^{(l)}W^{(l)}) \qquad (5)$$

$\hat{A}$ = A + I represents an adjacency matrix with self-connection added. I represents an identity matrix.

$$\widehat{D}_{ii} = \sum_j \widehat{A}_{ij}$$

. i represents the number of rows in the matrix. j represents the number of columns in the matrix. $H^{(l)}$ represents the features of all nodes in the lth layer of the multilayer network in the feature extraction model. $H^{(0)}$ represents the features of all nodes in the input layer of the feature extraction model. W represents a matrix of trainable weights (i.e., network parameters) of the feature extraction model. $W^{(l)}$ represents a matrix of trainable weights of the lth layer of the multilayer network in the feature extraction model. $\sigma(\cdot)$ represents an activation function.

In some optional embodiments, the predicted performance corresponding to each resource sub-graph may be obtained based on the first feature set, each second feature set, and the prediction model of the first network as follows. At least one third feature set is obtained based on the first feature set and each second feature set. A third feature set may include the first feature set and a second feature set. Predicted data corresponding to each resource sub-graph is obtained based on each third feature set and the prediction model. The predicted performance corresponding to the resource sub-graph is obtained based on the predicted data corresponding to the resource sub-graph.

In the implementation, in order to select the best task allocation strategy from at least one task allocation strategy, in the implementation, system performance in implementing each task allocation strategy may be predicted using the prediction model. In order to learn an intrinsic statistical law of task scheduling and resource allocation on different operating systems to adapt to a dynamically changing computing environment at an edge of internet of things, a prediction model may be constructed to process nonlinear regression prediction of a complex issue, allowing to learn a statistical law from a large number of historical samples implying a correspondence between different task allocation strategies and system performance.

In the implementation, input data of the prediction model may be an integrated feature (i.e., the third feature set) integrating the first feature set and one second feature set obtained respectively using the feature extraction model. Exemplarily, the first feature set and a second feature set may be spliced together to obtain a third feature set. The third feature set may further be input into the prediction model. Predicted data corresponding to each resource sub-graph may be obtained through layer-by-layer iteration of a forward propagation algorithm of the multilayer network in the prediction model.

In some optional embodiments, the predicted data may represent a predicted value of a performance index (or referred to as key performance index, system performance index, or key system performance index), including at least one of predicted execution duration for executing a task to be handled, predicted energy consumption in executing the task to be handled, predicted reliability for executing the task to be handled. Predicted execution duration may be a predicted value of the execution duration. Predicted energy consumption may be a predicted value of energy consumption. Predicted reliability may be a predicted value of reliability. Exemplarily, predicted data is a vector including three data or three components. One data or component may represent predicted execution duration for executing the task to be handled, denoted for example as $\lambda_t$. One data or component may represent the predicted energy consumption in executing or implementing the task to be handled, denoted for example as $\lambda_e$. One data or component may represent predicted reliability of executing the task to be handled, denoted for example as $\lambda_r$. Then, predicted performance corresponding to each resource sub-graph may be determined based on the above predicted data. Performance may also be referred to as overall system performance.

In some optional embodiments, the predicted performance corresponding to each resource sub-graph may be obtained based on the predicted data corresponding to the resource sub-graph as follows. Predicted data corresponding to each resource sub-graph is weighted with a preset weight to obtain predicted performance corresponding to the resource sub-graph.

In the implementation, taking predicted data including three components as an example, a component may be weighted with a preset weight corresponding to the component. That is, predicted performance $\eta$ corresponding to the predicted data may be obtained according to the formula (6). $Q(\cdot)$ may represent a function including weighting information on each component or data or (key) performance index.

$$\eta = Q\left(\lambda_t, \ \lambda_e, \ \lambda_r, ...\right) \tag{6}$$

A specific form of function (6), i.e., specific information on a preset weight, may depend on different requirements (or degree of importance, or degree of interest) of different scenes on delay, energy consumption, reliability, etc. The trade-off among multiple performance indices may be achieved by weighting performance indices using a specific function, and the weight of each key performance index may be calculated according to the set formula to obtain the overall system performance. That is, the predicted performance obtained through the formula (6) reflects the overall system performance related to quality of service (QoS).

In some optional embodiments, the first network may be trained as follows. The feature extraction model and the prediction model are trained based on an actual performance and predicted performance of each task allocation strategy.

In the implementation, the feature extraction model and the prediction model may be trained by updating network parameters of the feature extraction model and the prediction model specifically based on the predicted performance of each task allocation strategy and the actual performance in the training dataset/database.

In some optional embodiments, the feature extraction model and the prediction model may be trained as follows. Back propagation is performed on an error between the predicted performance and the actual performance of each task allocation strategy, and a network parameter of the prediction model and a network parameter of the feature extraction model of the first network are updated using a gradient descent algorithm, until the error between the predicted performance and the actual performance meets a preset condition.

Exemplarily, an error between predicted performance and actual performance meets the preset condition if the error between the predicted performance and the actual performance is less than a preset threshold.

In the implementation, an intrinsic statistical law of task scheduling on different operating systems of multiple heterogeneous IoT devices may be learned from a correspondence between different task allocation strategies and system performance (execution duration, power consumption, reliability, etc.) using the prediction model based on the features extracted by the multilayer network of the feature extraction model, implementing prediction of system performance with a given task allocation strategy before implementing a task, so as to facilitate selection of a task allocation strategy capable of obtaining optimal system performance from different task allocation strategies included in multiple resource sub-graphs. Optimal matching of a computing task to be handled with available resources on an IoT device is implemented, maximizing resource utilization, thus improving the overall system performance.

In some optional embodiments of the disclosure, the method may further include a step as follows. The training dataset is updated. The updated training dataset is configured to update the first network. Updating the first network may be training the first network, or optimizing the first network. Updating of the training dataset may include updating of a task allocation strategy (such as a resource sub-graph) as well as updating of an actual performance. In one example, the training dataset may further include a computation graph. Then, updating the training dataset may further include updating the computation graph.

In some optional embodiments, the training dataset may be updated in at least one mode as follows.

At least one resource sub-graph is produced using at least one of heuristic, graph search, graph optimization, or sub-graph matching based on a computation graph and a resource graph. An actual performance corresponding to each resource sub-graph of the at least one resource sub-graph is obtained by executing the task based on a task allocation strategy corresponding to the resource sub-graph. The computation graph, each resource sub-graph, and the actual performance corresponding to each resource sub-graph are put into the training dataset.

At least one resource sub-graph is produced using at least one of heuristic, graph search, graph optimization, or sub-graph matching based on a computation graph and a resource graph. A predicted performance corresponding to each resource sub-graph of the at least one resource sub-graph is obtained through the first network. A resource sub-graph having a best predicted performance is selected from the at least one resource sub-graph. An actual performance of a task allocation strategy corresponding to the resource sub-graph having the best predicted performance is obtained by executing the task based on the task allocation strategy. The computation graph, the resource sub-graph having the best predicted performance, and the actual performance are put into (added into) the training dataset.

At least one resource sub-graph is produced through random walk based on a computation graph and a resource graph. An actual performance of a task allocation strategy corresponding to each of the at least one resource sub-graph is obtained by executing the task based on the task allocation strategy. The computation graph, the at least one resource sub-graph, and the actual performance are put into the training dataset.

In the implementation, the first network may be trained periodically through a continuously updated training dataset, such that a system or platform for task allocation based on the first network is capable of self-learning and adaptation, implementing intelligent adaptation, such that the more the system is used, the smarter the system will be.

A training dataset may be updated in at least one of the above modes. In the first mode, at least one task allocation strategy may be obtained using at least one of heuristic, graph search, graph optimization, or sub-graph matching. After an actual task has been performed according to the at least one task allocation strategy, actual performance of each task allocation strategy may be recorded. The at least one task allocation strategy and the actual performance of the at least one task allocation strategy may be put into the training dataset as new sample data. In the second mode, at least one task allocation strategy may first be obtained using at least one of heuristic, graph search, graph optimization, or sub-graph matching. A task allocation strategy having the best predicted performance may be determined from the at least one task allocation strategy through the first network. After a task has been actually implemented / executed according to the task allocation strategy having the best predicted performance, the resulting actual performance may be recorded. The task allocation strategy having the best predicted performance and the corresponding actual performance may be put into the training dataset as new sample data. In the third mode, when the system is not busy, operator allocation for a task to be handled may be performed by means of random walk on the resource graph, to produce multiple resource sub-graphs with different allocation strategies. Actual performance of a task allocation strategy corresponding to each resource sub-graph may be obtained by actually implementing the task allocation strategy. The task allocation strategy and the actual performance may be input into the training dataset, thereby overcoming a tendency to fall into a local optimal solution with a simple fixed mode-limited method of resource sub-graph construction based on greedy heuristic, increasing diversity of task allocation strategies, thereby obtaining a task allocation strategy with which it is more likely to obtain the optimal system performance.

In one example, the method for producing a resource sub-graph according to the embodiments of the disclosure (i.e., determining a first node in the computation graph, the first node having a resource demand that is maximum; determining at least one second node in the resource graph, the at least one second node meeting the resource demand of the first node; and determining a resource sub-graph based on each second node, each resource sub-graph including one task allocation strategy) may be of heuristic, or of graph search, or of graph optimization, or of sub-graph matching. The embodiments are not limited to obtaining a task allocation strategy via the above method for producing a resource sub-graph. A task allocation strategy may also be obtained using at least one of other heuristic, graph search, graph optimization, or sub-graph matching.

Embodiments of the disclosure further provide a method for task allocation based on an internet of things (IoT) device. FIG. 7 is a flowchart of a method for task allocation based on an IoT device according to an embodiment of the disclosure. As shown in FIG. 7, the method includes steps as follows.

At 401, a computation graph corresponding to a task to be handled and a resource graph corresponding to one or more IoT devices are determined.

At 402, at least one task allocation strategy is generated based on the computation graph and the resource graph.

At 403, the at least one task allocation strategy is put into a first network to obtain a predicted performance corresponding to each task allocation strategy.

At 404, a task allocation strategy with a best predicted performance is determined, and task allocation is performed based on the determined task allocation strategy.

The first network in the embodiment may be optimized by the above network training method described in detail, to obtain the optimized first network.

In the implementation, a task allocation strategy may represent a strategy with which a task to be handled is allocated to and implemented by at least one IoT device. In other words, at least one IoT device may be determined through a task allocation strategy, and a task to be handled may be implemented by the at least one IoT device as instructed by the task allocation strategy. In one example, a task allocation strategy may also be referred to as one of a task allocation method, a task allocation mode, a task scheduling strategy, a task scheduling method, a task scheduling mode, a task arrangement strategy, a task arrangement method, a task arrangement mode, etc.

The steps in 401 to 404 of the embodiment may specifically refer to the above detailed description of the method embodiments for network training. The embodiment differs in that predicted performance of each task allocation strategy is obtained through the first network, and a task allocation strategy with the best predicted performance may be selected for task allocation. Exemplarily, the predicted value of the system performance corresponding to each task allocation strategy may be obtained through the first network. A task allocation strategy corresponding to a maximum predicted value may be selected for task allocation.

In some optional embodiments of the disclosure, the at least one task allocation strategy may be generated based on the computation graph and the resource graph as follows. At least one resource sub-graph is produced based on the computation graph and the resource graph. Each resource sub-graph of the at least one resource sub-graph includes one task allocation strategy, and the task allocation strategy is configured to allocate at least one node in the resource graph to each node in the computation graph. A node in each resource sub-graph represents at least part of capabilities on the IoT device(s). An edge of two adjacent nodes in each resource sub-graph represents a relationship between at least parts of the capabilities on the IoT device(s).

The embodiment may refer to the above detailed description of the method embodiments for network training, which is not repeated here.

In some optional embodiments of the disclosure, the at least one resource sub-graph may be generated based on the computation graph and the resource graph as follows. A first node in the computation graph is determined. The first node is a node needing the most resources among all nodes in the computation graph. At least one second node in the resource graph is determined. The at least one second node is at least one node meeting the resource demand of the first node. One resource sub-graph is determined based on each second node. Each resource sub-graph includes one task allocation strategy.

The embodiment may refer to the above detailed description of the method embodiments for network training (including the detailed description as shown in FIG. 3 and FIG. 4, for example), which is not repeated here.

In some optional embodiments of the disclosure, the predicted performance of each task allocation strategy may be obtained as follows. A predicted performance corresponding to each resource sub-graph is obtained by the first network based on the computation graph and the resource sub-graph.

The embodiment may refer to the above detailed description of the method embodiments for network training, which is not repeated here.

In some optional embodiments of the disclosure, the predicted performance corresponding to each resource sub-graph may be obtained through the first network as follows. A first feature set is obtained by extracting at least one feature of the computation graph using a feature extraction model of the first network. At least one second feature set is obtained by respectively extracting at least one feature of at least one resource sub-graph through the feature extraction model. The predicted performance corresponding to each resource sub-graph is obtained based on the first feature set, each second feature set of the at least one second feature set, and a prediction model of the first network.

The embodiment may refer to the above detailed description of the method embodiments for network training (including the detailed description as shown in FIG. 5, FIG. 6a, and FIG. 6b, for example), which is not repeated here.

In some optional embodiments of the disclosure, the predicted performance corresponding to each resource sub-graph may be obtained based on the first feature set, each second feature set, and the prediction model of the first network as follows. At least one third feature set is obtained based on the first feature set and each second feature set. Each third feature set of the at least one third feature set includes the first feature set and a second feature set. Predicted data corresponding to each resource sub-graph is obtained based on each third feature set and the prediction model. The predicted performance corresponding to each resource sub-graph is obtained based on the predicted data corresponding to the resource sub-graph.

The embodiment may refer to the above detailed description of the method embodiments for network training, which is not repeated here.

In some optional embodiments, the predicted data include at least one of predicted execution duration for executing a task to be handled, predicted energy consumption in executing the task to be handled, or predicted reliability for executing the task to be handled.

The embodiment may refer to the above detailed description of the method embodiments for network training, which is not repeated here.

In some optional embodiments, the predicted performance corresponding to each resource sub-graph may be obtained based on the predicted data corresponding to the resource sub-graph as follows. Predicted data corresponding to each resource sub-graph is weighted by a preset weight, to obtain the predicted performance corresponding to the resource sub-graph.

The embodiment may refer to the above detailed description of the method embodiments for network training, which is not repeated here.

In some optional embodiments, the task allocation strategy with the best predicted performance may be determined and the task allocation may be performed based on the determined task allocation strategy as follows. A task allocation strategy corresponding to predicted performance (i.e., the predicted value of the overall system performance index) of a maximum numerical value is selected according to the predicted performance corresponding to each resource sub-graph. A task may be actually allocated according to the selected strategy.

In some optional embodiments of the disclosure, the method may further include steps as follows. After task allocation has been performed, an actual performance of executing the task to be handled according to the task allocation strategy is obtained. The task allocation strategy and the corresponding actual performance are recorded/stored in a training dataset. The training dataset may be configured to update the first network.

In the implementation, after performing task allocation according to the determined task allocation strategy with the best predicted performance, a task to be handled may be actually executed according to the task allocation strategy to obtain the actual performance (or actual overall system performance). The task allocation strategy and the actual performance of the task allocation strategy may be recorded/stored in a training dataset used for updating the first network, to form or update the training dataset.

Task allocation according to embodiments of the disclosure is described below with reference to a specific example.

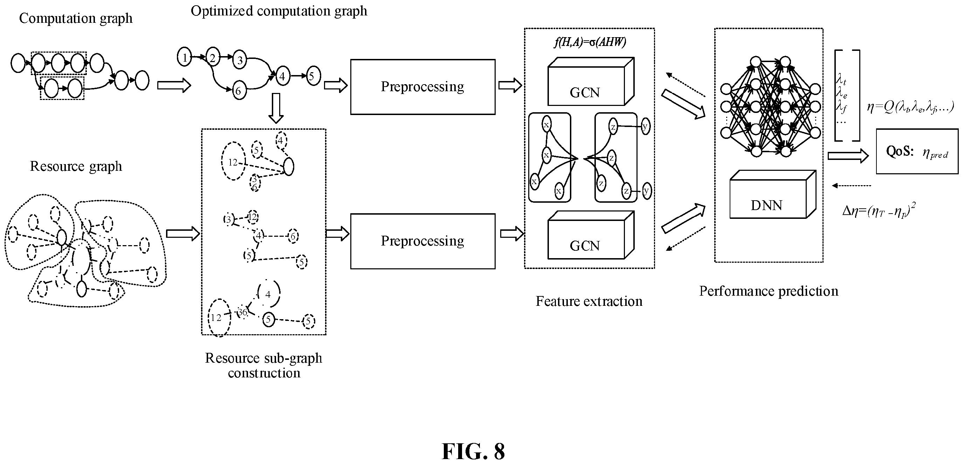

FIG. 8 is a diagram of a method for task allocation based on an IoT device according to an embodiment of the disclosure. As shown in FIG. 8, first, the computation graph of a task to be handled may be determined. In one example, the computation graph is optimized, such as by combining some nodes, so as to obtain an optimized computation graph. It is to be noted that the computation graph mentioned in the above embodiments of the disclosure may be an optimized computation graph. Further, nodes in the computation graph may be numbered according to a certain rule.

Secondly, at least one resource sub-graph may be produced based on the computation graph and a resource graph constructed according to resources and capabilities of IoT devices in the system. The generation of a resource sub-graph may make reference to the description in the above embodiments, which is not repeated here. In addition, resource sub-graphs shown in FIG. 8 may specifically refer to a resource sub-graphs in FIG. 4.

Thirdly, the computation graph and the resource sub-graphs may be preprocessed respectively, specifically by determining an adjacency matrix and an input feature set (which may also be referred to as an input feature or an input feature matrix) corresponding to the computation graph, as well as an adjacency matrix and an input feature set (which may also be referred to as an input feature or an input feature matrix) corresponding to each resource sub-graph. Further, a first feature set may be obtained by respectively inputting the adjacency matrix and the input feature set (or the input feature or the input feature matrix) corresponding to the computation graph into a feature extraction model and performing feature extraction on the input data. A second feature set may be obtained by respectively inputting the adjacency matrix and the input feature set (which may also be referred to as the input feature or the input feature matrix) corresponding to the each resource sub-graph into the feature extraction model and performing feature extraction on the input data. Exemplarily, the feature extraction model may be implemented through a graph convolutional neural network (GCN).

Fourthly, the first feature set and the second feature set may be integrated/fused into a third feature set. Prediction performance corresponding to each resource sub-graph may be obtained by inputting the third feature set into a prediction model and performing system performance prediction. Exemplarily, the prediction model may be implemented through a deep neural network (DNN).

Predicted data of a performance index, including such as predicted execution duration $\lambda_t$ for executing the task to be handled, predicted energy consumption $\lambda_e$ in executing or implementing the task to be handled, predicted reliability \ for executing the task to be handled, etc., may be obtained through the prediction model. Prediction performance $\eta$ corresponding to each resource sub-graph may be obtained by weighting these predicted data by one or more preset weights. Further, a resource sub-graph with a maximum $\eta$ may be selected from predicted performance corresponding to respective resource sub-graphs obtained. Task allocation may be performed according to a task allocation strategy represented by the resource sub-graph with the maximum predicted performance.

In one example, actual performance obtained by each actual execution or implementation of the task is recorded. An error between a predicted performance and the actual performance may be determined by comparing the predicted performance with the actual performance. Then, network parameters of the feature extraction model and the prediction model included in the first network may be updated through the error back propagation and the gradient descent algorithm, thereby implementing training of the feature extraction model and the prediction model.

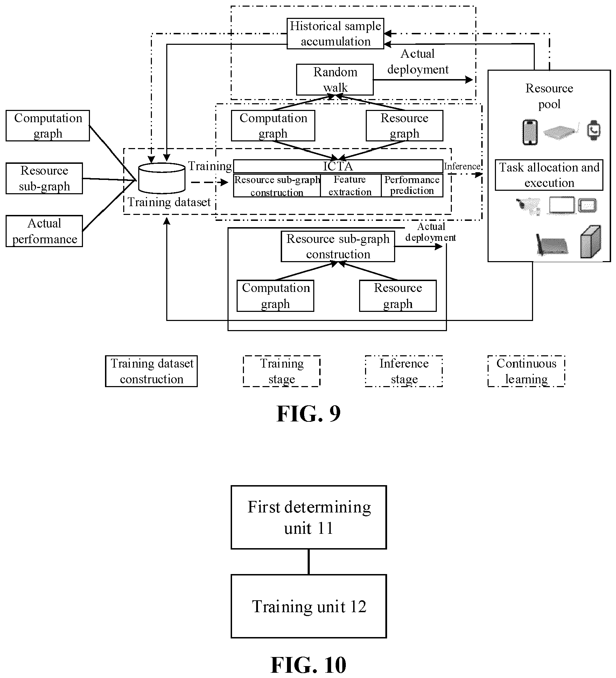

FIG. 9 is a diagram of composition of a system or platform for task allocation according to an embodiment of the disclosure. As shown in FIG. 9, the system for task allocation according to the embodiment includes training dataset construction, training stage, inference stage, and continuous learning, as follows.

In training dataset construction, computation graphs constructed according to different tasks to be processed and resource graphs constructed according to resources and capacities of multiple types of IoT devices may be taken as inputs, and multiple resource sub-graphs including different task allocation strategies may be constructed through a resource sub-graph construction module, and actually deployed on one or more IoT devices. Actual performance of implementing the task according to a task allocation strategy may be recorded. Each task allocation strategy (i.e., resource sub-graph) and actual performance obtained with the strategy or sub-graph may be taken as training data, thereby completing initial training dataset construction. Under actual circumstances, the training dataset may further include a computation graph corresponding to a task to be handled.

In the training stage, the input may be all training data (also referred to as training samples) in the training dataset. Each (piece of) training data may include a computation graph, a resource sub-graph, actual system performance corresponding to the resource sub-graph. The training data may be input into a network model according to an embodiment of the disclosure. Back propagation of an error between a predicted value $\eta_p$ of an index of system performance and a true (or actual) value $\eta_t$ of the system performance as obtained may be implemented through a gradient descent algorithm, to update network parameters (such as weights) of a feature extraction model and a prediction model in the network model until convergence. The network parameters (or model parameters) obtained finally are within an acceptable range of error (which may be manually set in the algorithm), making a predicted value of an index of system performance of training samples to be closest to the actual value.

In the inference stage, a task allocation strategy with the best predicted performance may be obtained according to the trained network model based on a demand of a task to be handled for resources and capacities or resources that IoT devices are capable of providing. The task to be handled may be actually allocated to one or more IoT devices according to the strategy. Input data may be a computation graph constructed according to the task to be executed or implemented, and a resource graph constructed according to any IoT device having an idle resource. The two graph structures (i.e., the computation graph and the resource graph) including a great amount of underlying information about computing power, storage, and communication may be input into the network model. A predicted value of system performance corresponding to each resource sub-graph (i.e., different task allocation strategies) may be obtained using a resource sub-graph construction module, a feature extraction model, and a performance prediction model in the network model. A task allocation strategy with a maximum predicted value of system performance (i.e., maximum $\eta_p$) may be selected as an optimal task allocation strategy. The task may be deployed and actually executed by deploying each operator of the task to be handled on a corresponding IoT device according to the optimal task allocation strategy.

In the continuous learning stage, continuous learning may be implemented by periodically training network parameters in the feature extraction model and the prediction model in the network model through a continuously updated training dataset, such that a system or platform for task allocation is capable of self-learning and adaptation, implementing intelligent adaptation, such that the more the system is used, the smarter the system will be. Continuous learning may be implemented specifically through historical sample accumulation and random walk. In historical sample accumulation, each time a computing task is actually carried out, a task allocation strategy used and resulting actual system performance may be recorded, and stored in the training dataset as a new training sample. Random walk may be implemented specifically as described above.

The embodiments of the disclosure provide intelligent computing task allocation (ICTA) enabling efficient deep learning in an IoT distributed edge computing system, and construct a system and / or platform for intelligent allocation of a deep learning task across heterogeneous IoT devices based on ICTA. ICTA mainly includes resource sub-graph construction, feature extraction, and performance prediction. Inputs are a computation graph constructed according to a current deep learning task and a resource graph constructed according to any IoT edge device having an idle resource. Resource sub-graph construction is performed through graph search, sub-graph matching, etc., based on the computation graph and the resource graph, to produce multiple resource sub-graphs carrying different task allocation strategies, making the most of available resources on an IoT device, implementing operator-level allocation and optimization of a task to be handled. Feature extraction and performance prediction are implemented respectively using a multilayer neural network. A resource sub-graph and the computation graph are respectively put into a feature extraction model to implement feature extraction and integration to fully explore one or more features related to a dimension such as computing power, storage, communication, etc., hiding in nodes and graph topology of the resource sub-graph and the computation graph. Then, an integrated feature is put into a performance prediction model to implement system performance prediction. A correspondence between different task allocation strategies and system performance as well as an intrinsic statistical law of task scheduling on different operating systems are learned through end-to-end training of the feature extraction model and the performance prediction model, implementing accurate prediction of system performance of a given task allocation strategy before actually implementing a task, such that an optimal allocation strategy is selected from any alternative strategies, implementing optimal matching of a computing task to available resources, thereby maximizing a rate of resource utilization, and improving the overall system performance. A mechanism of continuous learning is introduced to train ICTA periodically using a training dataset that is constantly updated, further improving system performance and adaptability to a dynamically changing environment, making the system adaptive and self-learning, implementing intelligent adaptation, such that the more the system for allocating a task is used, the smarter the system will be.

Specifically, the disclosure and the above embodiments have technical points and advantages as follows.

1, a system and / or platform for deep learning task intelligent allocation across heterogeneous IoT devices based on intelligent task allocation, including a training dataset construction stage, a training stage, an inference stage, and a continuous learning stage, is constructed, which provides a solution for constructing distributed training and inference of a deep learning model across heterogeneous IoT devices, and facilitates generation of an end-to-end automatically optimized distributed edge computing ecological mode across heterogeneous IoT devices.

2, ICTA is proposed, which enables efficient deep learning in an IoT distributed edge computing system and includes resource sub-graph construction, feature extraction, performance prediction, etc., achieving optimal allocation of high-performance and intelligently adaptive deep learning computing tasks across heterogeneous IoT devices.

3, a feature extraction model extracts features of nodes and topologies of a resource sub-graph and a computation graph, respectively, and performs feature integration, implementing deep perception, feature extraction, and feature matching on one or more features of a dimension such as computing power, storage, communication, etc., which plays a key role in performance of a deep learning computing task.

4, for performance prediction, system performance is predicted by learning an intrinsic statistical law of task scheduling on different operating systems using a multilayer neural network based on an integrated feature, and exploring a correspondence between different task allocation strategies and system performance through end-to-end training of the feature extraction model and a performance prediction model, such that a task allocation strategy corresponding to optimal system performance (prediction) is selected from alternative strategies to actually implement the deep learning task, implementing optimal matching of the deep learning computing task to available resources on an IoT device, thereby maximizing resource utilization, and improving the system performance.

5, continuous learning is implemented mainly in two modes, i.e., historical sample accumulation and random walk. A training set is updated constantly based on the two modes. The feature extraction model and the prediction model are trained periodically, improving the system performance, adapting to a dynamic change in an environment, making the system adaptive and self-learning, implementing intelligent adaptation, such that the more the system is used, the smarter the system will be.

Embodiments of the disclosure provide an apparatus for network training based on an internet of things (IoT) device. FIG. 10 is a first diagram of a structure of composition of an apparatus for network training based on an IoT device according to an embodiment of the disclosure. As shown in FIG. 10, the apparatus includes a first determining unit 11 and a training unit 12.

The first determining unit 11 is configured to determine a training dataset. The training dataset includes at least one task allocation strategy and a corresponding actual performance of the at least one task allocation strategy. An actual performance of a task allocation strategy is obtained by actually carrying out a task according to the task allocation strategy.

The training unit 12 is configured to train a first network based on the training dataset. The first network is configured to predict performance of a task allocation strategy.

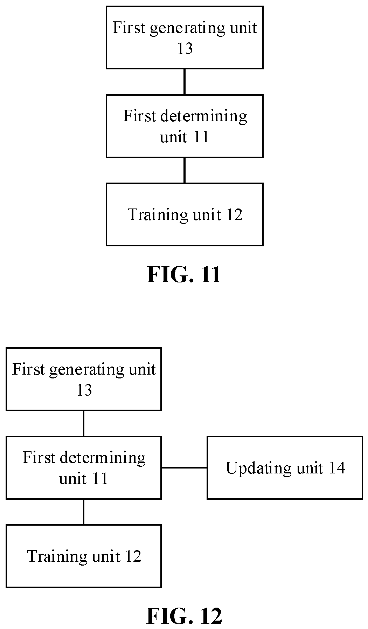

In some optional embodiments of the disclosure, as shown in FIG. 11, the apparatus may further include a first generating unit 13. The first generating unit 13 is configured to determine a computation graph corresponding to a task to be handled and a resource graph corresponding to one or more IoT devices, and generate the at least one task allocation strategy based on the computation graph and the resource graph.

In some optional embodiments of the disclosure, the first generating unit 13 is configured to generate at least one resource sub-graph based on the computation graph and the resource graph. Each resource sub-graph of the at least one resource sub-graph may include one task allocation strategy. The task allocation strategy may be configured to allocate at least one node in the resource graph to each node in the computation graph. A node in each resource sub-graph may represent at least part of capabilities on the IoT device(s). An edge of two adjacent nodes in each resource sub-graph may represent a relationship between at least parts of the capabilities on the IoT device(s).

In some optional embodiments of the disclosure, the first generating unit 13 is configured to determine a first node in the computation graph, the first node needing the most resources among all nodes in the computation graph; determine at least one second node in the resource graph, the at least one second node meeting the resource demand of the first node; and determine a resource sub-graph based on each second node in the at least one second node. Each resource sub-graph may include one task allocation strategy.

In some optional embodiments of the disclosure, the training unit 12 is configured to train the first network based on the actual performance and a predicted performance of the at least one task allocation strategy.

In some optional embodiments of the disclosure, the training unit 12 is further configured to obtain a predicted performance corresponding to each resource sub-graph by the first network based on the computation graph and the resource sub-graph.

In some optional embodiments of the disclosure, the training unit 12 is configured to obtain a first feature set by extracting at least one feature of the computation graph using a feature extraction model of the first network, obtain at least one second feature set by extracting at least one feature of at least one resource sub-graph through the feature extraction model, and obtain the predicted performance corresponding to each resource sub-graph based on the first feature set, each second feature set of the at least one second feature set, and a prediction model of the first network.

In some optional embodiments of the disclosure, the training unit 12 is configured to obtain at least one third feature set based on the first feature set and each second feature set, each third feature set of the at least one third feature set including the first feature set and a second feature set; obtain predicted data corresponding to each resource sub-graph based on each third feature set and the prediction model; and obtain the predicted performance corresponding to each resource sub-graph based on the predicted data corresponding to the resource sub-graph.

In some optional embodiments of the disclosure, the predicted data include at least one of predicted execution duration for executing a task to be handled, predicted energy consumption in executing the task to be handled, or predicted reliability for executing the task to be handled.

In some optional embodiments of the disclosure, the training unit 12 is configured to weight predicted data corresponding to each resource sub-graph according to a preset weight, and obtain predicted performance corresponding to the resource sub-graph.

In some optional embodiments of the disclosure, the training unit 12 is configured to train the feature extraction model and the prediction model based on an actual performance and a predicted performance of each task allocation strategy.

In some optional embodiments of the disclosure, the training unit 12 is configured to perform back propagation on an error between the predicted performance and the actual performance of each task allocation strategy, and update a network parameter of the prediction model and a network parameter of the feature extraction model of the first network using a gradient descent algorithm, until the error between the predicted performance and the actual performance meets a preset condition.

In some optional embodiments of the disclosure, as shown in FIG. 12, the apparatus may include an updating unit 14. The updating unit 14 is configured to update the training dataset. The updated training dataset may be configured to update (or train) the first network.

In some optional embodiments of the disclosure, the updating unit 14 is configured to update the training dataset in at least one mode as follows.

At least one resource sub-graph is produced using at least one of heuristic, graph search, graph optimization, or sub-graph matching based on a computation graph and a resource graph. An actual performance corresponding to each resource sub-graph of the at least one resource sub-graph is obtained by executing the task based on a task allocation strategy corresponding to the resource sub-graph. The computation graph, each resource sub-graph, and the actual performance corresponding to the resource sub-graph are put into the training dataset.

At least one resource sub-graph is produced using at least one of heuristic, graph search, graph optimization, or sub-graph matching based on a computation graph and a resource graph. A predicted performance corresponding to each resource sub-graph of the at least one resource sub-graph is obtained through the first network. A resource sub-graph corresponding to a best predicted performance is selected from the at least one resource sub-graph. An actual performance of a task allocation strategy corresponding to the resource sub-graph corresponding to the best predicted performance is obtained by executing the task based on the task allocation strategy. The computation graph, the resource sub-graph corresponding to the best predicted performance, and the actual performance corresponding to the resource sub-graph are put into the training dataset.

At least one resource sub-graph is produced through random walk based on a computation graph and a resource graph. An actual performance of a task allocation strategy corresponding to each resource sub-graph of the at least one resource sub-graph is obtained by executing the task based on the task allocation strategy. The computation graph, the at least one resource sub-graph, and the actual performance are put into the training dataset.

The method for producing a resource sub-graph according to the embodiments of the disclosure may be of heuristic, or of graph search, or of sub-graph matching. The embodiment is not limited to producing a task allocation strategy via the method for producing a resource sub-graph. A task allocation strategy may also be produced using at least one of other heuristic, graph search, or sub-graph matching.

In embodiments of the disclosure, in an actual application, each of the first determining unit 11, the training unit 12, the first generating unit 13, and the updating unit 14 in the apparatus may be implemented by a CPU, a GPU, a DSP, a microcontroller unit (MCU), or an FPGA, a TPU, an ASIC, or an AI chip, etc.

It is to be noted that division of the program modules in implementing network training by the apparatus for network training based on an IoT device according to the embodiment is merely illustrative. In an actual application, the processing may be allocated to be carried out by different program modules as needed. That is, an internal structure of the apparatus may be divided into different program modules for carrying out all or part of the processing. In addition, the apparatus for network training based on an IoT device according to the above embodiments belongs to the same concept as the method embodiments for network training based on an IoT device. The specific implementation of the apparatus may refer to the method embodiments, which is not repeated here.

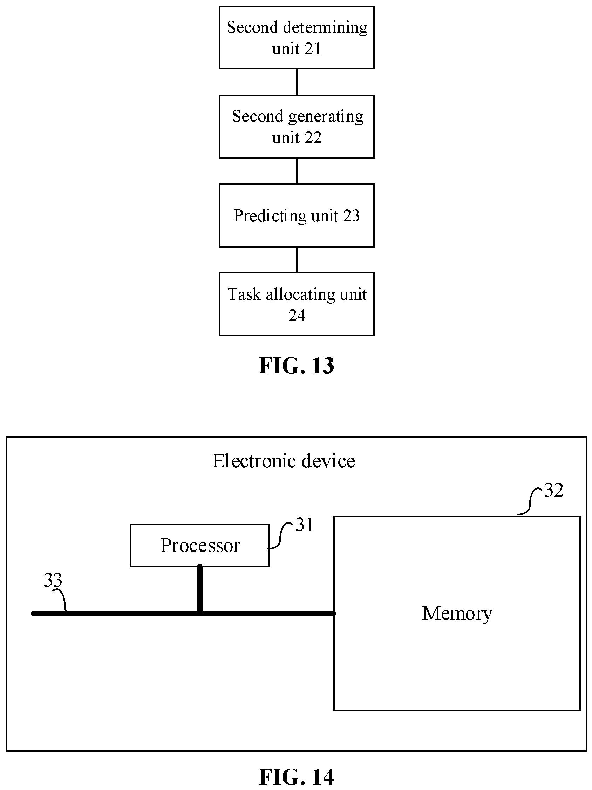

Embodiments of the disclosure further provide an apparatus for task allocation based on an internet of things (IoT) device. FIG. 13 is a diagram of a structure of composition of an apparatus for task allocation based on an IoT device according to an embodiment of the disclosure. As shown in FIG. 13, the apparatus includes a second determining unit 21, a second generating unit 22, a predicting unit 23, and a task allocating unit 24.

The second determining unit 21 is configured to determine a computation graph corresponding to a task to be handled and a resource graph corresponding to one or more IoT devices.

The second generating unit 22 is configured to generate at least one task allocation strategy based on the computation graph and the resource graph.

The predicting unit 23 is configured to put the at least one task allocation strategy into a first network, and obtain a predicted performance corresponding to each task allocation strategy of the at least one task allocation strategy.

The task allocating unit 24 is configured to determine a task allocation strategy with a best predicted performance, and perform task allocation based on the determined task allocation strategy.

In some optional embodiments of the disclosure, the second generating unit 22 is configured to produce at least one resource sub-graph based on the computation graph and the resource graph. Each resource sub-graph of the at least one resource sub-graph may include one task allocation strategy. The task allocation strategy may be configured to allocate at least one node in the resource graph to each node in the computation graph. A node in each resource sub-graph may represent at least part of capabilities on the IoT device(s). An edge of two adjacent nodes in each resource sub-graph may represent a relationship between at least parts of the capabilities on the IoT device(s).

In some optional embodiments of the disclosure, the second generating unit 22 is configured to determine a first node in the computation graph, the first node being a node needing the most resources among all nodes in the computation graph; determine at least one second node in the resource graph, the at least one second node meeting the resource demand of the first node; and determine a resource sub-graph based on each second node. Each resource sub-graph may include one task allocation strategy.

In some optional embodiments of the disclosure, the first network is optimized using the apparatus for network training according to the above embodiments of the disclosure.

In some optional embodiments of the disclosure, the predicting unit 23 is configured to obtain a predicted performance corresponding to each resource sub-graph by the first network based on the computation graph and the resource sub-graph.

In some optional embodiments of the disclosure, the predicting unit 23 is configured to obtain a first feature set by extracting at least one feature of the computation graph using a feature extraction model of the first network, obtain at least one second feature set by extracting at least one feature of at least one resource sub-graph through the feature extraction model, and obtain the predicted performance corresponding to each resource sub-graph based on the first feature set, each second feature set of the at least one second feature set, and a prediction model of the first network.

In some optional embodiments of the disclosure, the predicting unit 23 is configured to obtain at least one third feature set based on the first feature set and each second feature set, each third feature set of the at least one third feature set including the first feature set and a second feature set; obtain predicted data corresponding to each resource sub-graph based on each third feature set and the prediction model; and obtain the predicted performance corresponding to each resource sub-graph based on the predicted data corresponding to the resource sub-graph.

In some optional embodiments of the disclosure, the predicted data include at least one of predicted execution duration for executing a task to be handled, predicted energy consumption in executing the task to be handled, or predicted reliability for executing the task to be handled.

In some optional embodiments of the disclosure, the predicting unit 23 is configured to weight predicted data corresponding to each resource sub-graph according to a preset weight, and obtain predicted performance corresponding to the resource sub-graph.

In some optional embodiments of the disclosure, the task allocating unit 24 is configured to determine the task allocation strategy with the best predicted performance, and actually allocate and execute the task according to the strategy.

In some optional embodiments of the disclosure, the apparatus may further include an obtaining unit. The obtaining unit is configured to, after the task allocation is performed, obtain an actual performance of the task allocation strategy when the task to be handled is executed based on the task allocation strategy, and record the task allocation strategy and the actual performance in a training dataset. The training dataset may be configured to update the first network.

In embodiments of the disclosure, in an actual application, each of the second determining unit 21, the second generating unit 22, the predicting unit 23, the task allocating unit 24, and the obtaining unit in the apparatus may be implemented by a CPU, a GPU, a DSP, an ASIC, an AI chip, an MCU, or an FPGA, etc.

It is to be noted division of the program modules in implementing task allocation by the apparatus for task allocation based on an IoT device according to the embodiment is merely illustrative. In an actual application, the processing may be allocated to be carried out by different program modules as needed. That is, an internal structure of the apparatus may be divided into different program modules for carrying out all or part of the processing. In addition, the apparatus for task allocation based on an IoT device according to the above embodiments belongs to the same concept as the method embodiments for task allocation based on an IoT device. The specific implementation of the apparatus may refer to the method embodiments, which is not repeated here.

Embodiments of the disclosure further provide an electronic device. FIG. 14 is a diagram of a structure of composition of hardware of an electronic device according to an embodiment of the disclosure. As shown in FIG. 14, the electronic device may include a memory 32, a processor 31, and a computer program stored on the memory 32 and executable by the processor 31. When executing the computer program, the processor 31 implements steps of the method for network training according to the above embodiments of the disclosure, or steps of the method for task allocation according to the above embodiments of the disclosure.

It is to be understood that various components in the electronic device may be coupled together through a bus system 33. The bus system 33 is used for implementing connection communication among these components. In addition to a data bus, the bus system 33 may further include a power bus, a control bus, and a status signal bus. However, for clarity of description, various buses are marked as the bus system 33 in FIG. 14.

It is to be understood that the memory 32 may be a volatile memory or a non-volatile memory, or may include the volatile memory and the non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM). The magnetic surface memory may be a disk storage or a tape storage. The volatile memory may be random access memory (RAM) serving as an external cache. It is exemplarily but unlimitedly described that RAMs in various forms may be adopted, such as a Static RAM (SRAM), a synchronous SRAM (SSRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DRRAM). The memory 32 described in the embodiments of the disclosure is intended to include but not limited to memories of these and any other suitable type.

The method in the embodiments of the disclosure may be applied to a processor 31, or implemented by the processor 31. The processor 31 may be an integrated circuit chip and has a signal processing capability. During an implementation process, each operation in the above method may be completed via an integrated logic circuit of hardware in the processor 31 or an instruction in a software form. The processor 31 may be a universal processor, a Digital Signal Processor (DSP), or other programmable logic devices, discrete gates or transistor logic devices, and discrete hardware component. Each method, operation and logic block diagram disclosed in the embodiments of the disclosure may be implemented or executed by the processor 31. The universal processor may be a microprocessor or the processor may also be any conventional processor and the like. The operations of the methods disclosed in combination the embodiments of the disclosure may be directly embodied to be executed and completed by a hardware decoding processor or executed and completed by a combination of hardware and software modules in the decoding processor. The software module may be located in a storage medium. The storage medium is located in the memory 32. The processor 31 reads information from the memory 32 and completes the operations of the foregoing methods in combination with the hardware of the processor.

In an exemplary embodiment, the electronic device may be implemented by one or more application specific integrated circuits (ASIC), DSPs, programmable logic devices (PLD), complex programmable logic devices (CPLD), FPGAs, general-purpose processors, controllers, MCUs, microprocessors, or other electronic components, to implement the foregoing methods.

In an exemplary embodiment, embodiments of the disclosure further provide a computer-readable storage medium such as the memory 32 including a computer program. The computer program may be executed by the processor 31 of the electronic device to implement steps of the foregoing methods. The computer-readable storage medium may be a memory such as a FRAM, a ROM, a PROM, an EPROM, an EEPROM, a flash memory, a magnetic surface memory, an optical disc, or a CD-ROM, etc., or may be a device that includes one of the memories mentioned above or a combination of any of the memories.

Embodiments of the disclosure further provide a computer-readable storage medium having stored thereon a computer program. The computer program, when executed by a processor, implements steps of the method for network training according the above embodiments of the disclosure, or steps of the method for task allocation according to the above embodiments of the disclosure.

The methods disclosed in some method embodiments provided in the disclosure may be freely combined without conflicts to obtain new method embodiments.

The features disclosed in some product embodiments provided in the disclosure may be freely combined without conflicts to obtain new product embodiments.

The features disclosed in some method or device embodiments provided in the disclosure may be freely combined without conflicts to obtain new method embodiments or device embodiments.

Terms "first", "second", "third" and the like in the specification, claims and drawings of the disclosure are adopted not to describe a specific sequence but to distinguish different objects. In addition, terms "include" and "have" and any variations thereof are intended to cover nonexclusive inclusions. For example, a method, system, product, or device including a series of steps or units is not limited to the steps or units which have been listed but further includes steps or units which are not listed or includes other steps or units intrinsic to the process, the method, the product, or the device.

In some embodiments provided by the disclosure, it is to be understood that the disclosed device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, various functional units in the embodiments of the disclosure may be integrated in one processing unit, or exist as separate units respectively, or two or more than two units may also be integrated into a unit. The integrated unit may be implemented in form of hardware, or a combination of hardware and software functional unit(s).

A person having ordinary skill in the art may understand that all or part of the operations of the method embodiments may be implemented by related hardware instructed through a program. The program may be stored in a computer-readable storage medium. When the program is executed, the operations of the method embodiments are executed. The storage medium includes various media capable of storing program codes such as a mobile resource storage device, a ROM, a magnetic disk, or an optical disc.

Alternatively, when being realized in form of software functional unit and sold or used as an independent product, the integrated unit of the disclosure may be stored in a computer-readable storage medium. Based on such an understanding, the technical solutions of the embodiments of the disclosure substantially or parts making contributions to the related art may be embodied in form of a software product. The computer software product is stored in a storage medium, including a plurality of instructions configured to enable a computer device (which may be a personal computer, a server, a network device or the like) to execute all or part of the method in each embodiment of the disclosure. The storage medium includes various media capable of storing program codes such as a mobile resource storage device, a ROM, a magnetic disk, or an optical disc.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

**Claims**

1. A method for network training based on an internet of things, IoT, device, comprising:

   determining a training dataset, wherein the training dataset comprises at least one task allocation strategy and a corresponding actual performance of the at least one task allocation strategy, and the actual performance is obtained by executing a task to be handled according to the task allocation strategy; and
   training a first network based on the training dataset, wherein the first network is used to predict performance of a task allocation strategy.

2. The method of claim 1, further comprising:

   determining a computation graph corresponding to the task to be handled and a resource graph corresponding to one or more IoT devices, and
   generating the at least one task allocation strategy based on the computation graph and the resource graph.

3. The method of claim 2, wherein generating the at least one task allocation strategy based on the computation graph and the resource graph comprises: producing at least one resource sub-graph based on the computation graph and the resource graph,
   wherein each resource sub-graph of the at least one resource sub-graph comprises one task allocation strategy, the task allocation strategy is used to allocate at least one node in the resource graph to each node in the computation graph, a node in the resource sub-graph represents at least part of capabilities on the one or more IoT devices, and an edge of two adjacent nodes in the resource sub-graph represents a relationship between at least parts of the capabilities on the one or more IoT devices.

4. The method of claim 3, wherein producing the at least one resource sub-graph based on the computation graph and the resource graph comprises:

   determining a first node in the computation graph, the first node needing the most resources among all nodes in the computation graph;
   determining at least one second node in the resource graph, the at least one second node meeting the resource demand of the first node; and
   determining a resource sub-graph based on each of the at least one second node, said each resource sub-graph comprising one task allocation strategy.

5. The method of claim 1, wherein training the first network comprises:

   training the first network based on the actual performance and a predicted performance of the at least one task allocation strategy,
   wherein a predicted performance corresponding to each resource sub-graph is obtained by the first network based on a computation graph and the resource sub-graph.

6. The method of claim 5, wherein the predicted performance corresponding to each resource sub-graph is obtained by the first network through:

   obtaining a first feature set by extracting at least one feature of the computation graph using a feature extraction model of the first network;
   obtaining at least one second feature set by extracting at least one feature of at least one resource sub-graph by the feature extraction model; and
   obtaining the predicted performance corresponding to the resource sub-graph based on the first feature set, each second feature set of the at least one second feature set, and a prediction model of the first network.

**7.** The method of claim 6, wherein obtaining the predicted performance corresponding to the resource sub-graph based on the first feature set, each second feature set, and the prediction model of the first network comprises:

obtaining at least one third feature set based on the first feature set and each second feature set, each third feature set of the at least one third feature set comprising the first feature set and a second feature set;
obtaining predicted data corresponding to the resource sub-graph based on said each third feature set and the prediction model; and
obtaining the predicted performance corresponding to the resource sub-graph based on the predicted data corresponding to the resource sub-graph.

**8.** The method of claim 7, wherein training the first network comprises:
training the feature extraction model and the prediction model based on an actual performance and a predicted performance of each task allocation strategy of the at least one task allocation strategy.

**9.** The method of claim 8, wherein training the feature extraction model and the prediction model comprises:
performing back propagation on an error between the predicted performance and the actual performance of said each task allocation strategy, and updating network parameters of the prediction model and the feature extraction model of the first network using a gradient descent algorithm, until the error between the predicted performance and the actual performance meets a preset condition.

**10.** The method of claim 1, further comprising:
updating the training dataset, by at least one of:

producing at least one resource sub-graph using at least one of heuristic, graph search, graph optimization, or sub-graph matching based on a computation graph and a resource graph, obtaining an actual performance corresponding to each resource sub-graph of the at least one resource sub-graph by executing the task based on a task allocation strategy corresponding to the resource sub-graph, and putting, into the training dataset, the computation graph, each resource sub-graph, and the actual performance corresponding to the resource sub-graph;
producing the at least one resource sub-graph using at least one of heuristic, graph search, graph optimization, or sub-graph matching based on the computation graph and the resource graph, obtaining a predicted performance corresponding to each resource sub-graph of the at least one resource sub-graph through the first network, selecting a resource sub-graph with a best predicted performance from the at least one resource sub-graph, obtaining an actual performance of a task allocation strategy corresponding to the resource sub-graph with the best predicted performance by executing the task based on the task allocation strategy, and putting, to the training dataset, the computation graph, the resource sub-graph with the best predicted performance, and the actual performance corresponding to the resource sub-graph with the best predicted performance; or
producing at least one resource sub-graph through random walk based on the computation graph and the resource graph, obtaining an actual performance of a task allocation strategy corresponding to each resource sub-graph of the at least one resource sub-graph by executing the task based on the task allocation strategy, and putting, into the training dataset, the computation graph, the at least one resource sub-graph, and the actual performance.

**11.** A method for task allocation based on an internet of things, IoT, device, comprising:

determining a computation graph corresponding to a task to be handled and a resource graph corresponding to one or more IoT devices;
generating at least one task allocation strategy based on the computation graph and the resource graph;
putting the at least one task allocation strategy into a first network, and obtaining a predicted performance corresponding to each task allocation strategy of the at least one task allocation strategy;
determining a task allocation strategy with a best predicted performance, and performing task allocation based on the determined task allocation strategy.

**12.** The method of claim 11, wherein generating the at least one task allocation strategy based on the computation graph and the resource graph comprises: producing at least one resource sub-graph based on the computation graph and the resource graph,

wherein each resource sub-graph of the at least one resource sub-graph comprises one task allocation strategy, the task allocation strategy is used to allocate at least one node in the resource graph to each node in the computation graph, a node in the resource sub-graph represents at least part of capabilities on the one or more IoT devices, and an edge of two adjacent nodes in the resource sub-graph represents a relationship between at least parts of the capabilities on the one or more IoT devices.

13. The method of claim 12, wherein producing the at least one resource sub-graph based on the computation graph and the resource graph comprises:

determining a first node in the computation graph, the first node needing the most resources among all nodes in the computation graph;
determining at least one second node in the resource graph, the at least one second node meeting the resource demand of the first node; and
determining a resource sub-graph based on each second node of the at least one second node, said each resource sub-graph comprising one task allocation strategy.

14. The method of claim 11, wherein obtaining the predicted performance of each task allocation strategy comprises: obtaining a predicted performance corresponding to each resource sub-graph by the first network based on the computation graph and the resource sub-graph.

15. The method of claim 14, wherein obtaining the predicted performance corresponding to each resource sub-graph by the first network comprises:

obtaining a first feature set by extracting at least one feature of the computation graph using a feature extraction model of the first network;
obtaining at least one second feature set by extracting at least one feature of at least one resource sub-graph by the feature extraction model; and
obtaining the predicted performance corresponding to the resource sub-graph based on the first feature set, each second feature set of the at least one second feature set, and a prediction model of the first network.

16. The method of claim 15, wherein obtaining the predicted performance corresponding to the resource sub-graph based on the first feature set, each second feature set, and the prediction model of the first network comprises:

obtaining at least one third feature set based on the first feature set and each second feature set, each third feature set of the at least one third feature set comprising the first feature set and a second feature set;
obtaining predicted data corresponding to the resource sub-graph based on said each third feature set and the prediction model; and
obtaining the predicted performance corresponding to the resource sub-graph based on the predicted data corresponding to the resource sub-graph.

17. The method of claim 11, further comprising: after performing the task allocation,

obtaining an actual performance of the task allocation strategy when the task to be handled is executed based on the task allocation strategy; and
recording the task allocation strategy and the actual performance in a training dataset, the training dataset being used to update the first network.

18. An apparatus for network training based on an internet of things, IoT, device, comprising:

a first determining unit, configured to determine a training dataset, wherein the training dataset comprises at least one task allocation strategy and a corresponding actual performance of the at least one task allocation strategy, and the actual performance is obtained by executing a task to be handled according to the task allocation strategy; and
a training unit, configured to train a first network based on the training dataset, wherein the first network is used to predict performance of a task allocation strategy.

19. The apparatus of claim 18, further comprising a first generating unit, configured to determine a computation graph corresponding to the task to be handled and a resource graph corresponding to one or more IoT devices, and generate the at least one task allocation strategy based on the computation graph and the resource graph.

20. The apparatus of claim 19, wherein the first generating unit is configured to produce at least one resource sub-graph based on the computation graph and the resource graph,
    wherein each resource sub-graph of the at least one resource sub-graph comprises one task allocation strategy, the task allocation strategy is used to allocate at least one node in the resource graph to each node in the computation graph, a node in the resource sub-graph represents at least part of capabilities on the one or more IoT devices, and an edge of two adjacent nodes in the resource sub-graph represents a relationship between at least parts of the capabilities on the one or more IoT devices.

21. The apparatus of claim 19, wherein the first generating unit is configured to: determine a first node in the computation graph, the first node needing the most resources among all nodes in the computation graph; determine at least one second node in the resource graph, the at least one second node meeting the resource demand of the first node; and determine a resource sub-graph based on each second node of the at least one second node, said each resource sub-graph comprising one task allocation strategy.

22. An apparatus for task allocation based on an internet of things, IoT, device, comprising:

    a second determining unit, configured to determine a computation graph corresponding to a task to be handled and a resource graph corresponding to one or more IoT devices;
    a second generating unit, configured to generate at least one task allocation strategy based on the computation graph and the resource graph;
    a predicting unit, configured to put the at least one task allocation strategy into a first network and obtain a predicted performance corresponding to each task allocation strategy of the at least one task allocation strategy; and
    a task allocating unit, configured to determine a task allocation strategy with a best predicted performance, and perform task allocation based on the determined task allocation strategy.

23. A computer-readable storage medium having stored thereon a computer program which, when executed by a processor, implements steps of the method of any one of claims 1 to 10, or implements steps of the method of any one of claims 11 to 17.

24. An electronic device, comprising a memory, a processor, and a computer program stored on the memory and executable by the processor, wherein the processor, when executing the computer program, implements steps of the method of any one of claims 1 to 10, or implements steps of the method of any one of claims 11 to 17.

Smart home service

Home service robot  Intelligent monitoring  VR  Intelligent control

AI applications

| Action recognition | Natural language processing | Image processing | Face Recognition | ... |

| DNN | CNN | RNN | LSTM | GCN | GNN | ... |

Operator library

① ② ③ ...  ① ② ③ ...

Conv1  Conv2  Conv3  Pooling 1  Pooling 2  Pooling 3

ICTA

| Resource sub-graph construction | Feature extraction | Performance prediction |

Resource pool

Computation Resources

| CPU 1 | GPU1 | FPGA1 | DSP1 | ... |
| CPU 2 | GPU2 | FPGA2 | DSP2 | ... |
| CPU 3 | GPU3 | FPGA3 | DSP3 | ... |
| ... | ... | ... | ... | |

Storage/Memory Resources

| Memory 1 | Cache 1 | RAM1 | ... |
| Memory 2 | Cache 2 | RAM2 | ... |
| Memory 3 | Cache 3 | RAM3 | ... |
| ... | ... | ... | |

IoT Devices

| Device 1 | Device 2 | Device 3 | Device 4 | Device 5 | Device 6 | ... |

**FIG. 1**

A training database is determined, wherein the training database includes at least one task allocation strategy and a corresponding actual performance of the at least one task allocation strategy, and the actual performance is acquired by executing a task based on the task allocation strategy  —— 101

A first network is trained based on the training database, wherein the first network is configured to predict performance of a task allocation strategy  —— 102

**FIG. 2**

A first node in the computational graph is determined, the first node needing the most resources among all nodes in the computation graph   201

At least one second node in the resource graph is determined, the at least one second node meeting the resource demand of the first node   202

A resource sub-graph is determined based on each second node, each resource sub-graph including one task allocation strategy   203

**FIG. 3**

**FIG. 4**

301

A first feature set is obtained by extracting at least one feature of the computation graph using a feature extraction model of the first network

302

At least one second feature set is obtained by respectively extracting at least one feature of at least one resource sub-graph using the feature extraction model

303

The predicted performance corresponding to each resource sub-graph is obtained based on the first feature set, each second feature set of the at least one second feature set, and a prediction model of the first network

**FIG. 5**

**FIG. 6a**

Feature vector

CPU resource $\begin{bmatrix} f_{11} \\ f_{12} \\ f_{13} \\ f_{14} \\ f_{15} \\ \cdots \\ f_{1M} \end{bmatrix}$
GPU resource
DSP resource
FPGA resource
Memory resource

V1 V2

V3 V4

V5 V6

Feature vector $\begin{bmatrix} f_{51} \\ f_{52} \\ f_{53} \\ f_{54} \\ f_{55} \\ \cdots \\ f_{5M} \end{bmatrix}$

Input feature set

Adjacency matrix

## FIG. 6b

A computation graph corresponding to a task to be handled and a resource graph corresponding to one or more IoT devices are determined — 401

At least one task allocation strategy is generated based on the computation graph and the resource graph — 402

The at least one task allocation strategy is put into a first network to obtain a predicted performance corresponding to each task allocation strategy — 403

A task allocation strategy with a best predicted performance is determined, and task allocation is performed based on the determined task allocation strategy — 404

## FIG. 7

**FIG. 8**

**FIG. 9**

**FIG. 10**

First generating unit
13

First determining
unit 11

Training unit 12

**FIG. 11**

First generating unit
13

First determining
unit 11

Updating unit 14

Training unit 12

**FIG. 12**

Second determining
unit 21

Second generating
unit 22

Predicting unit 23

Task allocating unit
24

**FIG. 13**

Electronic device

Processor ⌇31

32⌇

33⌇

Memory

**FIG. 14**

## INTERNATIONAL SEARCH REPORT

| | International application No. |
|---|---|
| | **PCT/CN2022/075450** |

**A. CLASSIFICATION OF SUBJECT MATTER**

H04L 65/40(2022.01)i

According to International Patent Classification (IPC) or to both national classification and IPC

**B. FIELDS SEARCHED**

Minimum documentation searched (classification system followed by classification symbols)

H04L; G06F

Documentation searched other than minimum documentation to the extent that such documents are included in the fields searched

Electronic data base consulted during the international search (name of data base and, where practicable, search terms used)

CNTXT; CJFD; VEN; USTXT; WOTXT; EPTXT: 计算, 运算, 资源, 图, 子图, 任务, 分配, 策略, 训练, 能力, 模型, 预测, 估计, 历史, 性能, computation, resource, graph, subgraph, task, allocation, policy, training, capabilities, model, prediction, estimation, history, performance

**C. DOCUMENTS CONSIDERED TO BE RELEVANT**

| Category* | Citation of document, with indication, where appropriate, of the relevant passages | Relevant to claim No. |
|---|---|---|
| X | CN 111782354 A (STATE GRID JIANGSU ELECTRIC POWER CO., LTD., INFORMATION & TELECOMMUNICATION BRANCH et al.) 16 October 2020 (2020-10-16) description paragraphs [0004]-[0062], figure 3 | 1-24 |
| X | US 2021027197 A1 (DEEPMIND TECHNOLIGES LTD.) 28 January 2021 (2021-01-28) description, paragraphs [0004]-[0117] | 1-24 |
| A | CN 111562972 A (NORTHWESTERN POLYTECHNIC UNIVERSITY) 21 August 2020 (2020-08-21) entire document | 1-24 |
| A | 李抵非 等 (LI, Difei et al.). "基于分布式内存计算的深度学习方法 (A Method of Deep Learning based on Distributed Memory Computing)" 吉林大学学报 (工学版) (Journal of Jilin University (Engineering and Technology Edition)), No. 03, 15 May 2015 (2015-05-15), entire document | 1-24 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 April 2022** | **28 April 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/075450** |

| C. | DOCUMENTS CONSIDERED TO BE RELEVANT | |
| --- | --- | --- |
| Category* | Citation of document, with indication, where appropriate, of the relevant passages | Relevant to claim No. |
| A | 王丽 等 (WANG, Li et al.). "面向模型并行训练的模型拆分策略自动生成方法 (An Automatic Model Splitting Strategy Generation Method for Model Parallel Training)" 计算机工程与科学 (Computer Engineering & Science), No. 09, 15 September 2020 (2020-09-15), entire document | 1-24 |

Form PCT/ISA/210 (second sheet) (January 2015)

**INTERNATIONAL SEARCH REPORT**
Information on patent family members

International application No.

**PCT/CN2022/075450**

| Patent document cited in search report | | | Publication date (day/month/year) | Patent family member(s) | | | Publication date (day/month/year) |
|---|---|---|---|---|---|---|---|
| CN | 111782354 | A | 16 October 2020 | None | | | |
| US | 2021027197 | A1 | 28 January 2021 | WO | 2019151984 | A1 | 08 August 2019 |
| CN | 111562972 | A | 21 August 2020 | None | | | |

Form PCT/ISA/210 (patent family annex) (January 2015)

**REFERENCES CITED IN THE DESCRIPTION**

**Patent documents cited in the description**

- CN 202110184998